# EUROPEAN PATENT APPLICATION

(11) **EP 4 303 767 A1**
(43) Date of publication of application: **10.01.2024**
(21) Application number: 22778899.9
(22) Date of filing: 29.03.2022
(51) Int. Cl.: G06N 3/04

(54) **MODEL TRAINING METHOD AND APPARATUS**

(30) Priority: 31.03.2021 CN 202110350815
(71) Applicant: Huawei Technologies Co., Ltd., Longgang Shenzhen, Guangdong 518129 (CN)
(72) Inventor: GUO, Wei, Shenzhen, Guangdong 518129 (CN); GUO, Huifeng, Shenzhen, Guangdong 518129 (CN); GAO, Yong, Shenzhen, Guangdong 518129 (CN); TANG, Ruiming, Shenzhen, Guangdong 518129 (CN); LIU, Wenzhi, Shenzhen, Guangdong 518129 (CN); HE, Xiuqiang, Shenzhen, Guangdong 518129 (CN)
(74) Representative: Körber, Martin Hans
(86) International application number: PCT/CN2022/083526
(87) International publication number: WO 2022/206717

(57) **Abstract**

This application discloses a model training method, applied to the field of artificial intelligence. The method includes: A computing core of a first processor obtains an embedding used for model training, and writes an updated embedding to a first memory of the first processor instead of transferring the updated embedding to a second processor after model training is completed. In this application, after updating an embedding, the first processor saves the updated embedding to the first memory of the first processor. Without needing to wait for the second processor to complete a process of transferring a second target embedding to a GPU, the first processor may directly obtain the updated embedding and perform model training of a next round based on the updated embedding, provided that the first processor may obtain a latest updated embedding. This application can improve a speed for processing training data by the processor during model training.

## Description

This application claims priority to Chinese Patent Application No. 202110350815.2, filed with the China National Intellectual Property Administration on March 31, 2021 and entitled "MODEL TRAINING METHOD AND APPARATUS", which is incorporated herein by reference in its entirety.

### TECHNICAL FIELD

This application relates to the field of artificial intelligence, and in particular, to a model training method and apparatus.

### BACKGROUND

Artificial intelligence (artificial intelligence, AI) is a theory, a method, a technology, and an application system that simulates, extends, and expands human intelligence by using a digital computer or a machine controlled by the digital computer, to perceive an environment, obtain knowledge, and achieve an optimal result based on the knowledge. In other words, artificial intelligence is a branch of computer science and attempts to understand the essence of intelligence and produce a new intelligent machine that can react in a manner similar to human intelligence. Artificial intelligence is to research design principles and implementation methods of various intelligent machines, so that the machines have perception, inference, and decision-making functions.

Based on interaction behavior information of a large quantity of users and recommendation objects, parameters of a recommendation model are trained by using a method, such as gradient descent. After the model parameters are converged, personalized recommendation may be provided to users. A click-through rate in a personalized recommendation system is used as an example. Input features include user features, item features, historical user behavior features, and context features, and the features are classified into continuous features and discrete features. For a discrete feature, one-hot is used for sparse encoding, and an embedding vector representation is extracted from an embedding table based on an encoding ID. An original discrete feature ID is vectorized and then input to the recommendation model to be trained and learned for prediction.

A scale and a data volume of a training model directly affect an online service effect of the model. In a recommendation system, to enable a model to predict users' interests more accurately, a large quantity of features and a massive volume of data are usually required. The large quantity of features bring a large quantity of parameters, so that the model scale reaches hundreds of GB or even TB. The massive volume of data increases computing power required for model training. In addition, to capture users' interests more quickly to provide better user experience and a better recommendation effect to the users, a deep model needs to be updated frequently and quickly. These requirements result in a difficult problem: The recommendation model needs to be trained quickly based on the large quantity of features and the massive volume of data.

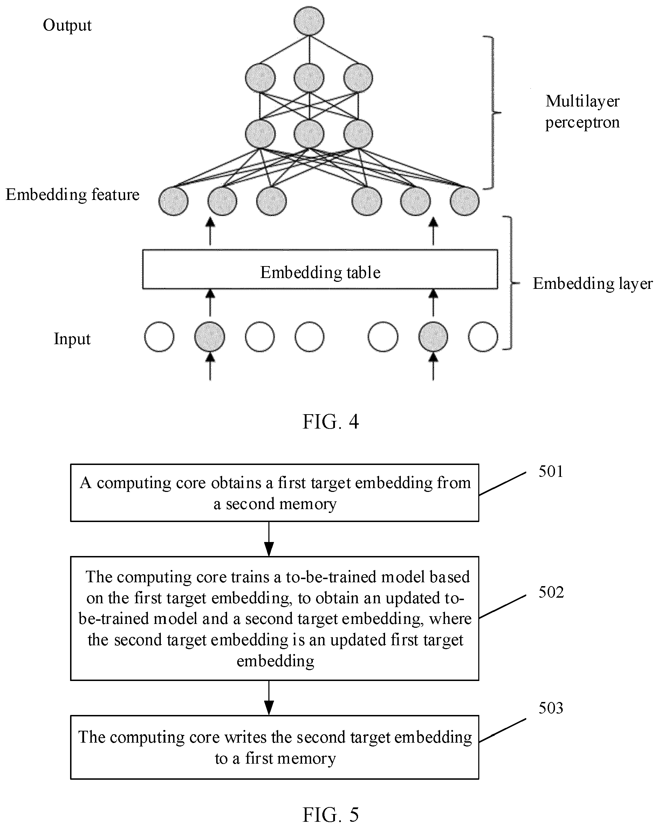

Researchers propose an embedding layer that compresses high-dimensional sparse one-hot vectors into low-dimensional dense vectors. The embedding layer is also referred to as an embedding. Main parameters of the recommendation model are also located at the embedding layer (hundreds of GB or even TB). In addition, to improve prediction accuracy of the model, a feature combination mining module is usually constructed for the recommendation model based on a multiplicative network and an MLP network. The module is usually complex, requires a relatively large computation amount, and may be used for feature interaction and non-linear mapping between data features. Different from visual and natural language processing (natural language processing, NLP) models, the recommendation model has its unique features. A click-through rate (click through rate, CTR) prediction CTR model is used as an example (with reference to FIG. 4). The recommendation model includes two parts: an embedding layer and a multilayer perceptron (multilayer perceptron, MLP). Data of a recommendation task includes a large quantity of high-dimensional sparse ID features. Usually, one-hot encoding is used. When these features are directly used for model training, it is difficult to learn parameters of a deep model part. To resolve this problem, researchers propose the embedding layer that compresses high-dimensional sparse one-hot vectors into low-dimensional dense vectors. The embedding layer is also referred to as an embedding.

In an existing implementation, during model training, after completing model training of a batch (batch), a computing core of a graphics processing unit (graphics processing unit, GPU) needs to transfer an updated embedding (for example, including an updated embedding 1) to a CPU. The CPU maintains an embedding table, and the embedding table may include some or all embeddings required for model training. If model training of a next batch also needs (the embedding 1), to ensure consistency of concerned parameters, the CPU needs to transfer the updated embedding 1 to the GPU. Then, a computing core of a computing unit of the GPU may obtain the updated embedding 1 from a cache and perform model training of the next batch based on the updated embedding 1. Therefore, the GPU needs to wait for the CPU to complete a process of transferring the updated embedding 1 to the GPU. This causes a time delay and greatly increases training duration.

### SUMMARY

According to a first aspect, this application provides a model training method, applied to a first processor. The first processor is communicatively connected to a second processor, and the first processor includes a computing core and a first memory. The second processor includes a second memory. The first processor and the second processor are processors of different types. The first processor may be a graphics processing unit GPU, an embedded neural network processing unit (neural network processing unit, NPU), or a tensor processing unit (tensor processing unit, TPU), the first memory may be a cache, and the second processor may be a central processing unit (central processing unit, CPU).

The method includes:
The computing core obtains a first target embedding from the second memory.

The computing core trains a to-be-trained model based on the first target embedding, to obtain an updated to-be-trained model and a second target embedding. The second target embedding is an updated first target embedding.

In this embodiment of this application, after the computing core obtains embeddings (including the first target embedding) required for model training of a current batch, the computing core may train the to-be-trained model based on the embeddings (including the first target embedding) required for model training of the current batch, to obtain the updated to-be-trained model and updated embeddings (including the second target embedding).

The computing core writes the second target embedding to the first memory.

It can be learned that, in this embodiment of this application, after updating the first target embedding, the first processor saves the second target embedding to the first memory of the first processor. Without needing to wait for the second processor to complete a process of transferring the second target embedding to a GPU, the first processor may directly obtain the second target embedding and perform model training based on the second target embedding, provided that the first processor may obtain a latest updated embedding (the second target embedding). Throughput of training data is increased, and a model training speed is improved.

In a possible implementation, that the computing core trains a to-be-trained model based on the first target embedding includes:
The computing core performs model training of an M^{th} batch on the to-be-trained model based on the first target embedding. M is a positive integer greater than 1.

After the computing core writes the second target embedding to the first memory, the method further includes:
The computing core obtains the second target embedding from the first memory.

The computing core performs model training of an (M + 1)^{th} batch on the updated to-be-trained model based on the second target embedding.

If the first target embedding is further an embedding required for model training of a next batch, the computing core may directly obtain the updated first target embedding (namely, the second target embedding) from the first memory. If some embeddings required for model training of the (M + 1)^{th} batch are not stored in the first memory, the second processor may transfer these embeddings to the first memory.

In a possible implementation, after the computing core performs model training of an (M + 1)^{th} batch on the updated to-be-trained model based on the second target embedding, a third target embedding is obtained. The third target embedding is an updated second target embedding. The computing core may write the third target embedding to the first memory.

In a possible implementation, that the computing core obtains a first target embedding from the second memory includes:
When the first target embedding is an embedding required for model training of the M^{th} batch, and the first target embedding is not stored in the first memory, the first memory obtains the first target embedding from the second memory. When the first target embedding is an embedding required for model training of the M^{th} batch, and the first target embedding is not stored in the first memory, the second processor may transfer the first target embedding from the second memory to the first memory. This is equivalent to that the first memory receives the first target embedding from the second memory.

The computing core obtains the first target embedding from the first memory.

For example, embeddings required for model training of the M^{th} batch include the first target embedding. If the second processor determines that the first target embedding is not stored in the first memory, the second processor may write the first target embedding from the second memory of the second processor to the first memory. At a time point of writing the first target embedding, the second processor may write the target embedding from the second memory to the first memory in a process during which the computing core performs model training of an (M - 1)^{th} batch on the to-be-trained model.

In this embodiment, in a process of model training of a previous batch, the second processor transfers embeddings that are not stored in the first memory and that are required for model training of a next batch to the first memory. In this way, the computing core may obtain all embeddings required for model training of the next batch from the first memory.

In a possible implementation, the method further includes:
Before that the computing core obtains the first target embedding from the first memory, the computing core obtains a first vector and a target vector that are from the second processor. The first vector indicates the embeddings required for model training of the M^{th} batch, each element in the first vector indicates one embedding, and different elements indicate different embeddings. The target vector indicates permutations of the embeddings indicated by the elements in the first vector when model training of the M^{th} batch is performed, and the embedding indicated by each element appears at least once in the permutations. The permutation may be a quantity of times that the embedding indicated by each element in the first vector is used during model training of the M^{th} batch, and a sequence of the embeddings indicated by the elements in the first vector during model training of the M^{th} batch.

That the computing core obtains the first target embedding from the first memory includes:
The computing core obtains, based on the first vector, the embeddings required for model training of the M^{th} batch from the first memory.

The computing core determines, based on the target vector and the embeddings required for model training of the M^{th} batch, the permutations of the embeddings required for model training of the M^{th} batch.

In an implementation, embeddings required for model training of a batch may include same embeddings. For example, embeddings required for model training of a batch may be: D = [embedding 1, embedding 2, embedding 3, embedding 3, embedding 2, embedding 4]. Both the embedding 2 and embedding 3 appear repeatedly. To reduce a quantity of embedding parameters read by the computing core of the first processor, the second processor may perform a deduplication operation on the embeddings required for model training of the batch. Specifically, the second processor may obtain the first vector, and the elements included in the first vector are the embeddings required for model training of the M^{th} batch. In addition, the first vector may indicate embedding information required for model training after deduplication.

For example, a first vector before deduplication may be: D = [embedding 1, embedding 2, embedding 3, embedding 3, embedding 2, embedding 4]. A deduplication operation is performed on the first vector to obtain a first vector after deduplication U = [embedding 1, embedding 2, embedding 3, embedding 4], and a target vector mask = [0, 1, 2, 2, 1, 3] is obtained. A first element in the target vector is 0, indicating that a first element in the first vector is a first element in the second vector. A second element in the target vector is 1, indicating that a second element in the first vector is a second element in the second vector. A third element in the target vector is 2, indicating that a third element in the first vector is a third element in the second vector. A fourth element in the target vector is 2, indicating that a fourth element in the first vector is the third element in the second vector. A fifth element in the target vector is 1, indicating that a fifth element in the first vector is the second element in the second vector. A sixth element in the target vector is 3, indicating that a sixth element in the first vector is a fourth element in the second vector. Therefore, the first vector before deduplication may be restored based on the first vector and the target vector. The first vector before deduplication is used to determine the permutations of the embeddings required for model training of the M^{th} batch.

In a possible implementation, before that the computing core trains a to-be-trained model based on the first target embedding, the method further includes:
The computing core obtains the third target embedding from a third memory of a third processor. The third target embedding and the first target embedding are embeddings required for model training of the M^{th} batch. The first processor and the third processor are processors of a same type.

That the computing core trains a to-be-trained model based on the first target embedding includes:
The computing core processes the first target embedding and the third target embedding by using the to-be-trained model, to obtain a target output. The computing core determines a first gradient based on the target output.

The computing core updates the to-be-trained model and the first target embedding based on the first gradient.

In a scenario in which a plurality of computing nodes are included, each computing node may be responsible for a part of embeddings required for model training of a current batch, and is responsible for updating a part of embeddings. In a possible implementation, the computing core needs to obtain the third target embedding from a third memory of a third processor of another server node and perform a feedforward process in a model training process based on the first target embedding and the third target embedding. However, during an update, the computing core of the first processor needs to update the first target embedding only based on the first gradient.

In a possible implementation, that the computing core determines a first gradient based on the target output includes: The computing core determines the first gradient and a second gradient based on the target output.

After the computing core determines the first gradient and a second gradient based on the target output, the method further includes:
The computing core transfers the second gradient to a computing core of the third processor, so that the computing core of the third processor updates the third target embedding based on the second gradient.

Specifically, data communication (for example, allreduce communication) between the first processor and the third processor may be used to synchronize gradients of embeddings, so that the third processor may obtain a gradient obtained through computation by the first processor after model training of the current batch. Then, the third processor may update an embedding (the third target embedding) for which the third processor is responsible.

In a possible implementation, the first processor is a graphics processing unit GPU, an embedded neural network processing unit NPU, or a tensor processing unit TPU, the first memory is a cache, and the second processor is a central processing unit CPU.

According to a second aspect, an embodiment of this application provides a model training method, applied to a second processor. The second processor is communicatively connected to a first processor. The first processor includes a computing core and a first memory. The second processor includes a second memory. The first processor and the second processor are processors of different types. The method includes:

The second processor obtains embedding information required by the computing core for performing model training of an M^{th} batch and embedding information stored in the first memory, and M is a positive integer greater than 1.

The embedding information required for model training of the M^{th} batch may indicate embeddings required for model training of the M^{th} batch. For example, the information may be but is not limited to identification information or pointer information indicating the embedding. This is not limited herein.

The second processor writes a first target embedding to the first memory based on the embedding information required by the computing core for performing model training of the M^{th} batch and the embedding information stored in the first memory. The first target embedding is an embedding that is required for model training of the M^{th} batch and that is not stored in the first memory.

In a possible implementation, that the second processor writes a first target embedding to the first memory includes:
The second processor writes the first target embedding to the first memory in a process during which the computing core performs model training of an (M - 1)^{th} batch on a to-be-trained model.

In a possible implementation, before that the second processor writes a first target embedding to the first memory, the method further includes:
When available storage space of the first memory is less than storage space required for storing the first target embedding, the second processor deletes at least one embedding from the first memory, and writes the at least one embedding to the second memory. The at least one embedding is an embedding that is not required for model training of the M^{th} batch.

Storage space of the first memory is limited. If available storage space of the first memory is less than storage space required for storing the target embedding, the second processor needs to delete at least one embedding stored in the first memory, so that the first memory has sufficient space to store embeddings transferred from the second processor.

For example, the embeddings required for model training of the M^{th} batch include the first target embedding, an embedding 1, an embedding 2, and an embedding 3. The embedding 3, an embedding 4, and an embedding 5 are stored in the first memory, and the first target embedding, the embedding 1, and the embedding 2 are not stored in the first memory. Four embeddings may be stored in the first memory. Therefore, available storage space (1) of the first memory is less than storage space (3) required for storing the first target embedding. In this way, two embeddings (including the embedding 4 and the embedding 5) stored in the first memory may be deleted, so that the first memory has sufficient space to store the embeddings (including the first target embedding, the embedding 1, and the embedding 2) transferred from the second processor.

To ensure parameter consistency, the computing core may further write a deleted embedding to the second memory. In this way, when the second processor transfers an embedding to the first memory of the first processor next time, the transferred embedding is a latest updated embedding. Specifically, the second processor may write at least one embedding to the second memory.

Specifically, an embedding that needs to be deleted is definitely not an embedding required for model training of the current batch. Otherwise, if an embedding required for model training of the current batch is deleted, the second processor needs additional time to transfer the embedding to the first memory of the first processor.

In addition, in a model training process of the to-be-trained model, an embedding that is not used for a longest time in the plurality of embeddings is selected as the to-be-deleted embedding. In the model training process of the to-be-trained model, the embedding that is not used for a longest time in the plurality of embeddings may be considered as an infrequently used embedding. After these embeddings are deleted, embeddings required for model training in a subsequent long time may not include these embeddings. This reduces a frequency of transmitting data by the second processor to the first processor. In this selection manner, data transmission overheads from the second processor to the first processor may be reduced, and communication traffic of a computing system is reduced, thereby further improving a model training speed of the system.

In a possible implementation, the method further includes:
Before that the second processor writes a first target embedding to the first memory, the second processor obtains a first vector and a target vector. The first vector indicates the embeddings required for model training of the M^{th} batch, each element in the first vector indicates one embedding, and different elements indicate different embeddings. The target vector indicates permutations of the embeddings indicated by the elements in the first vector when model training of the M^{th} batch is performed, and the embedding indicated by each element appears at least once in the permutations.

The second processor transfers the first vector and the target vector to the first processor.

In a possible implementation, the first processor is a graphics processing unit GPU, an embedded neural network processing unit NPU, or a tensor processing unit TPU, the first memory is a cache, and the second processor is a central processing unit CPU.

According to a third aspect, this application provides a model training apparatus, applied to a first processor. The first processor is communicatively connected to a second processor. The first processor includes a computing core and a first memory. The second processor includes a second memory. The first processor and the second processor are processors of different types. The computing core includes:
an obtaining unit, configured to obtain a first target embedding from the second memory;
a model training unit, configured to train a to-be-trained model based on the first target embedding, to obtain an updated to-be-trained model and a second target embedding, where the second target embedding is an updated first target embedding; and
a data writing unit, configured to write the second target embedding to the first memory.

In a possible implementation, the model training unit is configured to perform model training of an M^{th} batch on the to-be-trained model based on the first target embedding, and M is a positive integer greater than 1.

The obtaining unit is configured to obtain the second target embedding from the first memory after the computing core writes the second target embedding to the first memory.

The model training unit is further configured to:
perform model training of an (M + 1)^{th} batch on the updated to-be-trained model based on the second target embedding.

In a possible implementation, the model training unit is further configured to:
obtain a third target embedding, after model training of the (M + 1)^{th} batch is performed on the updated to-be-trained model based on the second target embedding. The third target embedding is an updated second target embedding.

The data writing unit is further configured to write the third target embedding to the first memory.

In a possible implementation, when the first target embedding is an embedding required for model training of the M^{th} batch, and the first target embedding is not stored in the first memory, the first memory obtains the first target embedding from the second memory.

The obtaining unit is specifically configured to:
obtain the first target embedding from the first memory.

In a possible implementation, that the first memory obtains the first target embedding from the second memory includes:
in a process during which the computing core performs model training of an (M - 1)^{th} batch on the to-be-trained model, the first memory obtains the first target embedding from the second memory.

In a possible implementation, the obtaining unit is further configured to: before the computing core obtains the first target embedding from the first memory, obtain a first vector and a target vector that are from the second processor, where the first vector indicates embeddings required for model training of the M^{th} batch, each element in the first vector indicates one embedding, and different elements indicate different embeddings; and the target vector indicates permutations of the embeddings indicated by the elements in the first vector when model training of the M^{th} batch is performed, and the embedding indicated by each element appears at least once in the permutations;
obtain, based on the first vector, the embeddings required for model training of the M^{th} batch from the first memory; and
determine, based on the target vector and the embeddings required for model training of the M^{th} batch, the permutations of the embeddings required for model training of the M^{th} batch.

In a possible design, the obtaining unit is further configured to:
before the computing core trains the to-be-trained model based on the first target embedding, obtain the third target embedding from a third memory of a third processor. The third target embedding and the first target embedding are embeddings required for model training of the M^{th} batch, and the first processor and the third processor are processors of a same type.

The model training unit is specifically configured to:
process the first target embedding and the third target embedding by using the to-be-trained model, to obtain a target output, and determine a first gradient based on the target output; and
update the to-be-trained model and the first target embedding based on the first gradient.

In a possible implementation, the model training unit is specifically configured to:
determine the first gradient and a second gradient based on the target output.

The computing core further includes a second data transfer unit, configured to, after the first gradient and the second gradient are determined based on the target output, transfer the second gradient to a computing core of the third processor, so that the computing core of the third processor updates the third target embedding based on the second gradient.

In a possible implementation, the first processor is a graphics processing unit GPU, an embedded neural network processing unit NPU, or a tensor processing unit TPU, the first memory is a cache, and the second processor is a central processing unit CPU.

According to a fourth aspect, this application provides a model training apparatus, applied to a second processor. The second processor is communicatively connected to a first processor. The first processor includes a computing core and a first memory. The second processor includes a second memory. The first processor and the second processor are processors of different types. The apparatus includes:
an obtaining unit, configured to obtain embedding information required by the computing core for performing model training of an M^{th} batch and embedding information stored in the first memory, where M is a positive integer greater than 1; and
a data writing unit, configured to write a first target embedding to the first memory based on the embedding information required by the computing core for performing model training of the M^{th} batch and the embedding information stored in the first memory, where the first target embedding is an embedding that is required for model training of the M^{th} batch and that is not stored in the first memory.

In a possible implementation, the data writing unit is configured to write the first target embedding to the first memory in a process during which the computing core performs model training of an (M - 1)^{th} batch on a to-be-trained model.

In a possible implementation, the data writing unit is further configured to: before the first target embedding is written to the first memory, delete at least one embedding from the first memory and write the at least one embedding to the second memory when available storage space of the first memory is less than storage space required for storing the first target embedding. The at least one embedding is an embedding that is not required for model training of the M^{th} batch.

In a possible implementation, the obtaining unit is further configured to obtain a first vector and a target vector before the first target embedding is written to the first memory. The first vector indicates embeddings required for model training of the M^{th} batch, each element in the first vector indicates one embedding, and different elements indicate different embeddings. The target vector indicates permutations of the embeddings indicated by the elements in the first vector when model training of the M^{th} batch is performed, and the embedding indicated by each element appears at least once in the permutations.

The data writing unit is further configured to transfer the first vector and the target vector to the first processor.

In a possible implementation, the first processor is a graphics processing unit GPU, an embedded neural network processing unit NPU, or a tensor processing unit TPU, the first memory is a cache, and the second processor is a central processing unit CPU.

According to a fifth aspect, an embodiment of this application provides a model training apparatus, including a memory, a processor, and a bus system. The memory is configured to store a program, and the processor is configured to execute the program in the memory, to perform the method according to any one of the first aspect, the second aspect, and the optional implementations of the first aspect and the second aspect.

According to a sixth aspect, an embodiment of this application provides a computer-readable storage medium. A computer program is stored in the computer-readable storage medium. When the computer program is run on a computer, the computer is enabled to perform the method according to any one of the first aspect, the second aspect, and the optional implementations of the first aspect and the second aspect.

According to a seventh aspect, this application provides a computer program product, including code. When the code is run on a computer, the computer is enabled to perform the method according to any one of the first aspect, the second aspect, and the optional implementations of the first aspect and the second aspect.

According to an eighth aspect, this application provides a chip system. The chip system includes a processor. The processor is configured to support an execution device or a training device in implementing functions in the foregoing aspects, for example, sending or processing data or information involved in the foregoing method. In a possible design, the chip system further includes a memory. The memory is configured to store program instructions and data that are necessary for the execution device or the training device. The chip system may include a chip, or may include a chip and another discrete device.

Embodiments of this application provide a model training method, applied to a first processor. The first processor is communicatively connected to a second processor, and the first processor includes a computing core and a first memory. The second processor includes a second memory. The first processor and the second processor are processors of different types. The method includes: The computing core obtains a first target embedding from the second memory. The computing core trains a to-be-trained model based on the first target embedding, to obtain an updated to-be-trained model and a second target embedding. The second target embedding is an updated first target embedding. The computing core writes the second target embedding to the first memory. In the foregoing manner, after updating an embedding, the first processor saves the updated embedding to the first memory of the first processor. Without needing to wait for the second processor to complete a process of transferring the second target embedding to a GPU, the first processor may directly obtain the updated embedding and perform model training of a next round based on the updated embedding, provided that the first processor may obtain a latest updated embedding. This application can improve a speed for processing training data by the processor during model training.

### BRIEF DESCRIPTION OF DRAWINGS

FIG. 1 is a schematic diagram of a structure of an artificial intelligence main framework;
FIG. 2 is a schematic diagram of an application architecture;
FIG. 3 is a schematic diagram of an application architecture;
FIG. 4 is a schematic diagram of a structure of a model;
FIG. 5 is a schematic diagram of an embodiment of a model training method according to an embodiment of this application;
FIG. 6 is a schematic diagram of a model training method;
FIG. 7 to FIG. 12 are schematic diagrams of embodiments of a model training method according to an embodiment of this application;
FIG. 13 to FIG. 16 each is a schematic diagram of an effect according to an embodiment of this application;
FIG. 17 and FIG. 18a are schematic diagrams of software modules according to an embodiment of this application;
FIG. 18b is a schematic diagram of an embodiment of a model training method according to an embodiment of this application;
FIG. 19 and FIG. 20 are schematic diagrams of a model training apparatus according to an embodiment of this application;
FIG. 21 is a schematic diagram of a structure of a training device according to an embodiment of this application; and
FIG. 22 is a schematic diagram of a structure of a chip according to an embodiment of this application.

### DESCRIPTION OF EMBODIMENTS

The following describes embodiments of the present invention with reference to the accompanying drawings in embodiments of the present invention. Terms used in embodiments of the present invention are merely intended to explain specific embodiments of the present invention, and are not intended to limit the present invention.

The following describes embodiments of this application with reference to the accompanying drawings. A person of ordinary skill in the art may learn that, with the development of technologies and emergence of new scenarios, the technical solutions provided in embodiments of this application are also applicable to a similar technical problem.

In the specification, claims, and the accompanying drawings of this application, the terms "first", "second", and the like are intended to distinguish between similar objects but do not necessarily indicate a specific order or sequence. It should be understood that the terms used in such a way are interchangeable in proper circumstances, and this is merely a discrimination manner for describing objects having a same attribute in embodiments of this application. In addition, the terms "include", "have", and any other variants mean to cover the non-exclusive inclusion, so that a process, method, system, product, or device that includes a series of units is not necessarily limited to those units, but may include other units not expressly listed or inherent to such a process, method, product, or device.

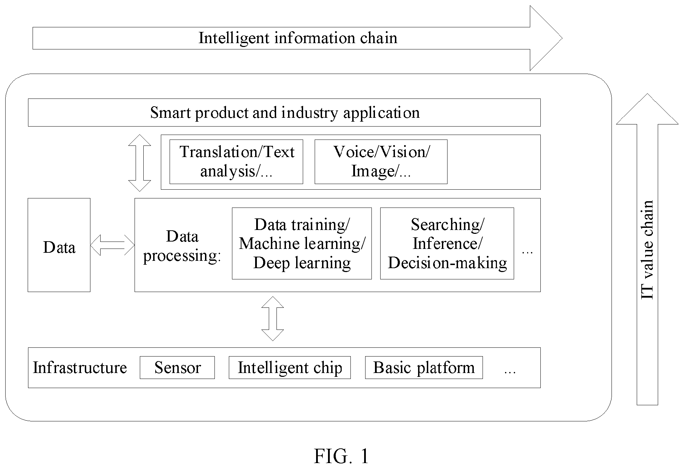

An overall working procedure of an artificial intelligence system is first described with reference to FIG. 1. FIG. 1 is a schematic diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects value brought by artificial intelligence to the information technology industry from an underlying infrastructure and information (technology providing and processing implementation) of artificial intelligence to an industrial ecological process of a system.

### (1) Infrastructure

The infrastructure provides computing capability support for the artificial intelligence system, implements communication with an external world, and implements support by using a basic platform. The infrastructure communicates with the outside by using sensors. A computing capability is provided by smart chips (hardware acceleration chips such as a CPU, an NPU, a GPU, an ASIC, and an FPGA). Basic platforms include related platforms, for example, a distributed computing framework and network, for assurance and support. The basic platforms may include a cloud storage and computing network, an interconnection network, and the like. For example, the sensor communicates with the outside to obtain data, and the data is provided to an intelligent chip in a distributed computing system provided by the basic platforms for computing.

### (2) Data

Data at an upper layer of the infrastructure indicates a data source in the field of artificial intelligence. The data relates to a graph, an image, voice, and text, further relates to internet of things data of a conventional device, and includes service data of an existing system and perception data such as force, displacement, a liquid level, a temperature, and humidity.

### (3) Data processing

Data processing usually includes a manner such as data training, machine learning, deep learning, searching, inference, decision-making, and the like.

Machine learning and deep learning may mean performing symbolic and formalized intelligent information modeling, extraction, preprocessing, training, and the like on data.

Inference is a process in which a human intelligent inference manner is simulated in a computer or an intelligent system, and machine thinking and problem resolving are performed by using formal information according to an inference control policy. Atypical function is searching and matching.

Decision-making is a process in which a decision is made after intelligent information is inferred, and usually provides functions such as classification, ranking, and prediction.

### (4) General-purpose capability

After data processing mentioned above is performed on data, some general capabilities may further be formed based on a data processing result, for example, an algorithm or a general system such as translation, text analysis, computer vision processing, speech recognition, and image recognition.

### (5) Smart product and industry application

Smart products and industry applications are products and applications of the artificial intelligence system in various fields. The smart products and industry applications involve packaging overall artificial intelligence solutions, to productize and apply intelligent information decision-making. Application fields of the smart products and the industry applications mainly include smart terminals, smart transportation, smart health care, autonomous driving, smart city, and the like.

The following describes an application scenario of embodiments of this application.

Embodiments of this application may be applied to a computing system. The computing system may be a server or a terminal device. The terminal device may be a mobile device, a computer, or the like. The computing system may include a first processor and a second processor. The first processor may be a graphics processing unit GPU, an embedded neural network processing unit NPU, a tensor processing unit TPU, or the like. The second processor may be a central processing unit CPU.

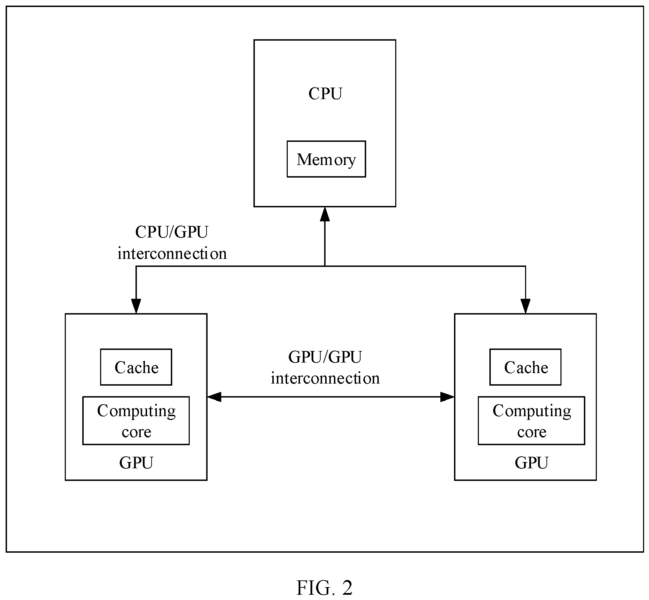

For example, the computing system is a server, the first processor is a GPU, and the second processor is a CPU. FIG. 2 is a schematic diagram of an architecture of a server according to an embodiment of this application. As shown in FIG. 2, the server may include a CPU and a plurality of GPUs interconnected to the CPU. The CPU may include a memory (may be referred to as a second memory in subsequent embodiments), the CPU may read and write the memory through a bus, and the GPU may include a computing core and a cache (or referred to as a video memory) (which may be referred to as a first memory in subsequent embodiments). The CPU and the GPU may transmit/exchange data through a bus such as a PCIe, and the GPU and the GPU are interconnected by using a PCIe switch/NVSwitch.

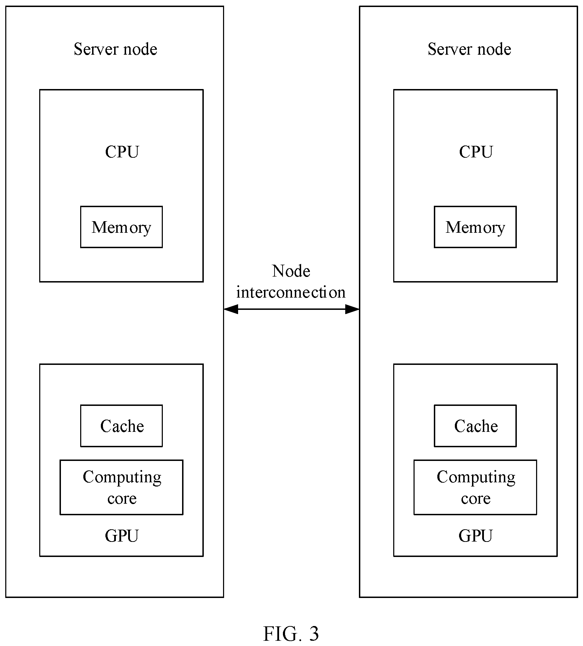

FIG. 3 is a schematic diagram of an architecture of a server cluster according to an embodiment of this application. As shown in FIG. 3, the server cluster may include a plurality of interconnected server nodes. The server node is a virtual concept, and includes one multi-core and multi-thread CPU node and several GPU nodes. The plurality of server nodes may be interconnected through a network, such as an Ethernet network/InfiniBand network.

The computing system to which embodiments of this application apply may be a server or a plurality of server nodes. An embedding (or referred to as an embedding parameter) is stored in a memory of a CPU node, and a cache of a GPU node may be used to cache a part of embeddings. A hard disk of the CPU node is used to store a training sample, and a computing core or a thread of the CPU node is mainly used to read data and transfer embeddings between the CPU and the GPU. A computing core of the GPU node is used for forward and reverse computation of a neural network, and data exchange/communication is performed between GPU nodes in a manner such as PCIe.

Embodiments of this application involve a large quantity of applications related to a neural network. For ease of understanding, the following first describes terms related to and involved in embodiments of this application and concepts related to the neural network and the like.

### (1) Neural network

The neural network may include a neuron. The neuron may be an operation unit that uses xs and an intercept of 1 as an input. An output of the operation unit may be as follows:
s = 1, 2, ..., or n. n is a natural number greater than 1. Ws is a weight of xs. b is a bias of the neuron. f is an activation function (activation function) of the neuron. The activation function is used for introducing a non-linear characteristic into the neural network, to convert an input signal of the neuron into an output signal. The output signal of the activation function may be used as an input of a next convolutional layer, and the activation function may be a sigmoid function. The neural network is a network formed by connecting a plurality of single neurons together. To be specific, an output of one neuron may be an input to another neuron. An input of each neuron may be connected to a local receptive field of a previous layer, to extract a feature of the local receptive field. The local receptive field may be an area including several neurons.

### (2) Embedding layer (embedding layer)

The embedding layer may be referred to as an input embedding (input embedding) layer. A current input may be a text input, for example, a section of text or a sentence. The text may be Chinese text, English text, or text in another language. After the current input is obtained, embedding processing may be performed on all words in the current input at the embedding layer, to obtain feature vectors of all the words. In some embodiments, the embedding layer includes an input embedding layer and a positional encoding (positional encoding) layer. At the input embedding layer, word embedding processing may be performed on all the words in the current input, to obtain word embedding vectors of all the words. At the positional encoding layer, locations of all the words in the current input may be obtained, to generate location vectors for the locations of all the words. In some examples, the locations of all the words may be absolute locations of all the words in the current input. For example, the current input is "what date should the Huabei debt be repaid", where a location of "what" may be represented as a first location, a location of "date" may be represented as a second location, and so on. In some examples, the locations of all the words may be locations of all the words relative to each other. For example, the current input is still "what date should the debt be repaid", where a location of "what" may be represented as preceding "date", a location of "date" may be represented as following "what" and preceding "should", and so on. When word embedding vectors and location vectors of all the words in the current input are obtained, the location vectors of all the words and the corresponding word embedding vectors may be combined to obtain feature vectors of all the words, that is, obtain a plurality of feature vectors corresponding to the current input. The plurality of feature vectors may be represented as an embedding vector with a preset dimension. A quantity of feature vectors in the plurality of feature vectors may be set to M, and preset dimensions may be H dimensions. In this case, the plurality of feature vectors may be represented as an M x H embedding vector.

### (3) Deep learning recommendation system

Based on interaction behavior information of a large quantity of users and recommendation objects, parameters of a recommendation model are trained by using a method, such as gradient descent. After the model parameters are converged, personalized recommendation may be performed for users. A click-through rate in a personalized recommendation system is used as an example. Input features include user features, item features, historical user behavior features, and context features, and the features are classified into continuous features and discrete features. For a discrete feature, one-hot is used for sparse encoding, and an embedding vector representation is extracted from an embedding table based on an encoding ID. An original discrete feature ID is vectorized and then input to the recommendation model to be trained and learned for prediction.

In a training process of the deep learning recommendation system, a scale and a data volume of a training model directly affect an online service effect of the model. In a recommendation system, to enable a model to predict users' interests more accurately, a large quantity of features and a massive volume of data are usually required. The large quantity of features bring a large quantity of parameters, so that the model scale reaches hundreds of GB or even TB. The massive volume of data increases computing power required for model training. In addition, to capture users' interests more quickly to provide better user experience and a better recommendation effect to the users, a deep model needs to be updated frequently and quickly. These requirements result in a difficult problem: The recommendation model needs to be trained quickly based on the large quantity of features and the massive volume of data.

Different from visual and natural language processing (natural language processing, NLP) models, the recommendation model has its unique features. A click-through rate (click through rate, CTR) prediction CTR model is used as an example (with reference to FIG. 4). The recommendation model includes two parts: an embedding layer and a multilayer perceptron (multilayer perceptron, MLP). Data of a recommendation task includes a large quantity of high-dimensional sparse ID features. Usually, one-hot encoding is used. When these features are directly used for model training, it is difficult to learn parameters of a deep model part. To resolve this problem, researchers propose the embedding layer that compresses high-dimensional sparse one-hot vectors into low-dimensional dense vectors. The embedding layer is also referred to as an embedding. Main parameters of the recommendation model are also located at the embedding layer (hundreds of GB or even TB). In addition, to improve prediction accuracy of the model, a feature combination mining module is usually constructed for the recommendation model based on a multiplicative network and an MLP network. The module is usually complex, requires a relatively large computation amount, and may be used for feature interaction and non-linear mapping between data features.

FIG. 5 shows a model training method according to an embodiment of this application. A first processor is communicatively connected to a second processor, the first processor includes a computing core and a first memory, and the second processor includes a second memory. The first processor and the second processor are processors of different types. The first processor may be a GPU, an NPU, or a TPU, the first memory may be a cache, and the second processor may be a CPU.

As shown in FIG. 5, the model training method provided in an embodiment of this application includes the following steps.

501: The computing core obtains a first target embedding from the second memory.

In this embodiment of this application, the computing core may obtain a to-be-trained model during model training. The to-be-trained model may include an embedding layer and another network layer. With a recommendation model as an example, the to-be-trained model may include an MLP layer.

To train the to-be-trained model, the computing core may obtain embeddings (including the first target embedding) required for a current batch from the first memory of the first processor. For ease of description, the following uses an example in which the first processor is a GPU and the second processor is a CPU for description.

In an existing implementation, after completing model training of a batch, the computing core needs to transfer an updated embedding (for example, including an updated embedding 1) to the CPU. The CPU maintains an embedding table, and the embedding table may include some or all embeddings required for model training. If model training of a next batch also needs (embedding 1), to ensure consistency of concerned parameters, the CPU needs to transfer the updated embedding 1 to the GPU, so that the computing core of the GPU may obtain the updated embedding 1 from a cache, and perform model training of the next batch based on the updated embedding 1. Therefore, the GPU needs to wait for the CPU to complete a process of transferring the updated embedding 1 to the GPU. This causes a time delay and greatly increases training duration.

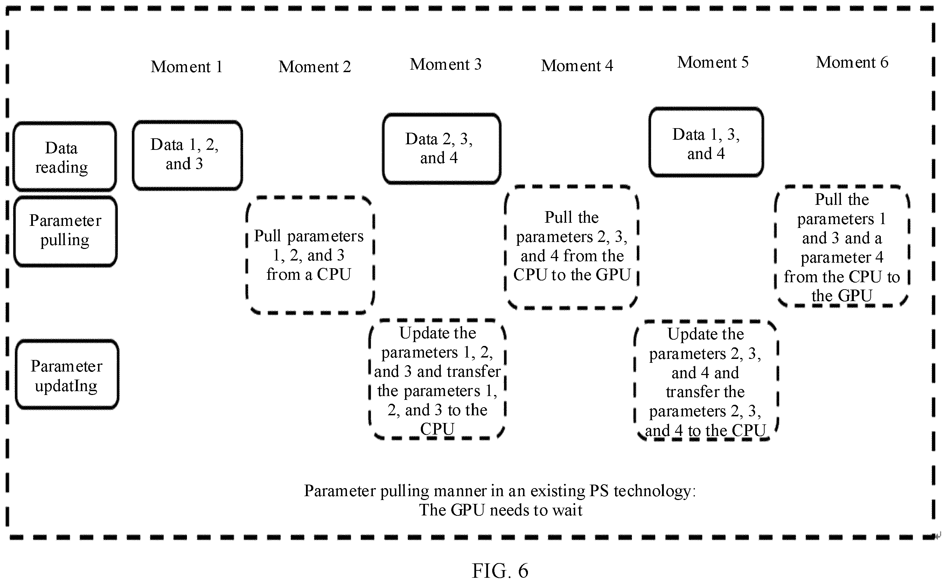

For details, refer to FIG. 6. At a moment 1, the CPU may determine that embeddings required for model training of a next batch are data 1, 2, and 3. At a moment 2, the CPU may transfer the data 1, 2, and 3 to the GPU. At a moment 3, the computing core of the GPU may complete model training based on the data 1, 2, and 3, and transfer updated data 1, 2, and 3 to the CPU. In addition, at the moment 3, the CPU may determine that embeddings required for model training of a next batch are data 2, 3, and 4. At a moment 4, the CPU may transfer the data 2, 3, and 4 to the GPU. At a moment 5, the computing core of the GPU may complete model training based on the data 2, 3, and 4, and transfer updated data 2, 3, and 4 to the CPU. In addition, at the moment 5, the CPU may determine that embeddings required for model training of a next batch are data 1, 3, and 4. At a moment 6, the CPU may transfer the data 1, 3, and 4 to the GPU. At the moments 2, 4, and 6, the GPU needs to wait for the CPU to complete a process of transferring the embeddings to the GPU. This greatly increases the training duration.

The model training method provided in this embodiment of this application may resolve the foregoing problem.

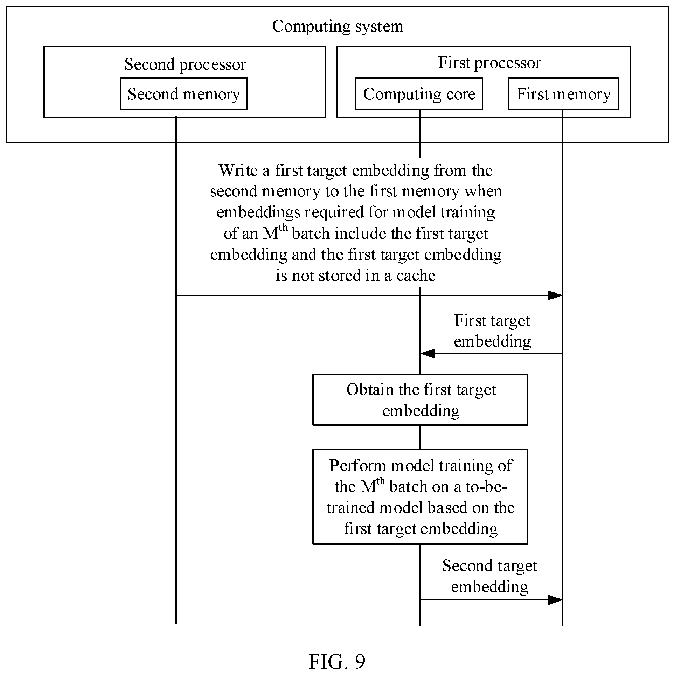

For details, refer to FIG. 9. In an implementation, if model training to be performed currently is model training of an M^{th} batch, the second processor may determine whether embeddings required for model training of the M^{th} batch are stored in the first memory. If the second processor determines that some or all of the embeddings required for model training of the M^{th} batch are not stored in the first memory, the second processor may obtain embeddings that are not stored in the first memory and that are required for model training from the second memory and transfer the embeddings that are not stored in the first memory and that are required for model training to the first memory.

For example, the embeddings required for model training of the M^{th} batch include the first target embedding. If the second processor determines that the first target embedding is not stored in the first memory, the second processor may write the first target embedding from the second memory to the cache.

At a time point of writing the first target embedding, the second processor may write the first target embedding from the second memory to the first memory in a process during which the computing core performs model training of an (M - 1)^{th} batch on the to-be-trained model.

Storage space of the first memory is limited. If available storage space of the first memory is less than storage space required for storing the target embedding, the second processor needs to delete at least one embedding stored in the first memory, so that the first memory has sufficient space to store embeddings transferred from the second processor.

For example, the embeddings required for model training of the M^{th} batch include the first target embedding, the embedding 1, an embedding 2, and an embedding 3. The embedding 3, an embedding 4, and an embedding 5 are stored in the first memory, and the first target embedding, the embedding 1, and the embedding 2 are not stored in the first memory. Four embeddings may be stored in the first memory. Therefore, the available storage space (1) of the first memory is less than the storage space (3) required for storing the first target embedding. In this way, two embeddings (including the embedding 4 and the embedding 5) stored in the first memory may be deleted, so that the first memory has sufficient space to store the embeddings (including the first target embedding, the embedding 1, and the embedding 2) transferred from the second processor.

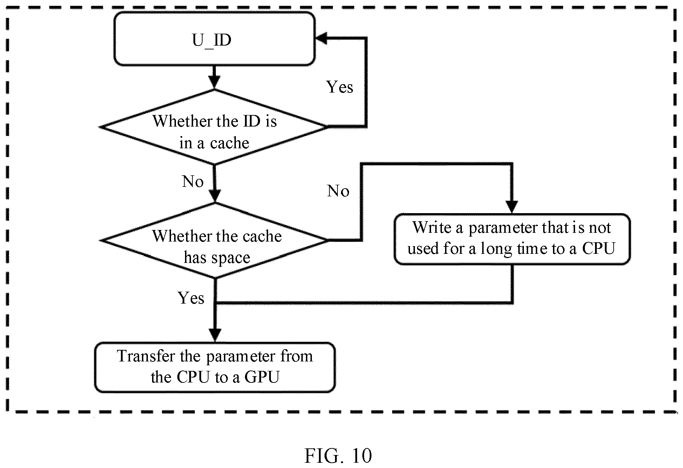

Refer to FIG. 10. To ensure parameter consistency, the computing core may further write a deleted embedding to the second memory. In this way, when the second processor transfers an embedding to the first memory of the first processor next time, the transferred embedding is a latest updated embedding. Specifically, the second processor may write at least one embedding to the second memory.

The following describes how the second processor determines which embeddings should be deleted from the first memory.

In this embodiment of this application, based on a preset condition, the at least one embedding may be obtained from a plurality of embeddings stored in the first memory. The preset condition includes at least one of the following conditions: in a model training process of the to-be-trained model, an embedding that is not used for a longest time in the plurality of embeddings; and an embedding that is not required for model training of the M^{th} batch.

Specifically, an embedding that needs to be deleted is definitely not an embedding required for model training of the current batch. Otherwise, if an embedding required for model training of the current batch is deleted, the CPU needs additional time to transfer the embedding to the first memory of the first processor.

In addition, in the model training process of the to-be-trained model, the embedding that is not used for a longest time in the plurality of embeddings may be considered as an infrequently used embedding. After these embeddings are deleted, embeddings required for model training in a subsequent long time may not include these embeddings. This reduces a frequency of transmitting data by the CPU to the first processor. In this selection manner, data transmission overheads from the CPU to the first processor may be reduced, and communication traffic of a computing system is reduced, thereby further improving a model training speed of the system.

In a model training process, to enable the computing core of the first processor to know embeddings required for model training of the current batch, the second processor needs to transfer information indicating the embeddings required for model training of the current batch to the computing core. In this way, the computing core may read, based on the foregoing information, the embeddings required for model training of the current batch and permutations of the embeddings from the first memory.

Specifically, before the computing core obtains the first target embedding from the first memory, the computing core may obtain a first vector and a target vector that are from the second processor. The first vector indicates the embeddings required for model training of the M^{th} batch, each element in the first vector indicates one embedding, and different elements indicate different embeddings. The target vector indicates permutations of the embeddings indicated by the elements in the first vector when model training of the M^{th} batch is performed, and the embedding indicated by each element appears at least once in the permutations. The permutation may be a quantity of times that the embedding indicated by each element in the first vector is used during model training of the M^{th} batch, and a sequence of the embeddings indicated by the elements in the first vector during model training of the M^{th} batch.

In an implementation, embeddings required for model training of a batch may include same embeddings. For example, embeddings required for model training of a batch may be: D = [embedding 1, embedding 2, embedding 3, embedding 3, embedding 2, embedding 4]. Both the embedding 2 and embedding 3 appear repeatedly. To reduce a quantity of embedding parameters read by the computing core of the first processor, the second processor may perform a deduplication operation on the embeddings required for model training of the batch. Specifically, the second processor may obtain the first vector, and the elements included in the first vector are the embeddings required for model training of the M^{th} batch. In addition, the first vector may indicate embedding information required for model training after deduplication.

For example, a first vector before deduplication may be: D = [embedding 1, embedding 2, embedding 3, embedding 3, embedding 2, embedding 4]. A deduplication operation is performed on the first vector to obtain a first vector after deduplication U = [embedding 1, embedding 2, embedding 3, embedding 4], and a target vector mask = [0, 1, 2, 2, 1, 3] is obtained. A first element in the target vector is 0, indicating that a first element in the first vector is a first element in the second vector. A second element in the target vector is 1, indicating that a second element in the first vector is a second element in the second vector. A third element in the target vector is 2, indicating that a third element in the first vector is a third element in the second vector. A fourth element in the target vector is 2, indicating that a fourth element in the first vector is the third element in the second vector. A fifth element in the target vector is 1, indicating that a fifth element in the first vector is the second element in the second vector. A sixth element in the target vector is 3, indicating that a sixth element in the first vector is a fourth element in the second vector. Therefore, the first vector before deduplication may be restored based on the first vector and the target vector. The first vector before deduplication is used to determine the permutations of the embeddings required for model training of the M^{th} batch.

In an implementation, the first processor may obtain, based on the first vector, the embeddings required for model training of the M^{th} batch from the first memory. The computing core then determines, based on the target vector and the embeddings required for model training of the M^{th} batch, the permutations of the embeddings required for model training of the M^{th} batch.

502: The computing core trains the to-be-trained model based on the first target embedding, to obtain an updated to-be-trained model and a second target embedding, where the second target embedding is an updated first target embedding.

In this embodiment of this application, after the computing core obtains embeddings (including the first target embedding) required for model training of a current batch, the computing core may train the to-be-trained model based on the embeddings (including the first target embedding) required for model training of the current batch, to obtain the updated to-be-trained model and updated embeddings (including the second target embedding).

In an implementation, the computing core may perform forward and reverse computation based on the embeddings (including the first target embedding) required for model training of the current batch and the to-be-trained model, to obtain a gradient corresponding to the to-be-trained model and a gradient corresponding to each embedding used for model training of the current batch. For example, the to-be-trained model includes an MLP, and a network gradient of the to-be-trained model may include a neural network gradient (MLP_G). Then, parameters of the to-be-trained model and embeddings may be updated based on the network gradient of the to-be-trained model and gradients of the embeddings required for model training of the current batch.

In an implementation, if the computing system may further include a third processor of a same processor type as the first processor, the first processor may complete computation of gradients of a part of embeddings required for model training of the current batch. After the gradients of the embeddings are obtained, the first processor may synchronize the gradients of the embeddings through communication between the first processors.

Specifically, the computing core obtains a third target embedding from a third memory of the third processor. The third target embedding and the first target embedding are embeddings required for model training of the M^{th} batch, and the first processor and the third processor are processors of a same type. The computing core processes the first target embedding and the third target embedding by using the to-be-trained model, to obtain a target output, and determines a first gradient and a second gradient based on the target output. The computing core may update the to-be-trained model and the first target embedding based on the first gradient, and transfer the second gradient to a computing core of the third processor, so that the computing core of the third processor updates the third target embedding based on the second gradient.

In a scenario in which a plurality of computing nodes are included, each computing node may be responsible for a part of embeddings required for model training of a current batch, and is responsible for updating a part of embeddings. In a possible implementation, the computing core needs to obtain the third target embedding from a third memory of a third processor of another server node and perform a feedforward process in a model training process based on the first target embedding and the third target embedding. However, during an update, the computing core of the first processor needs to update the first target embedding only based on the first gradient.

503: The computing core writes the second target embedding to the first memory.

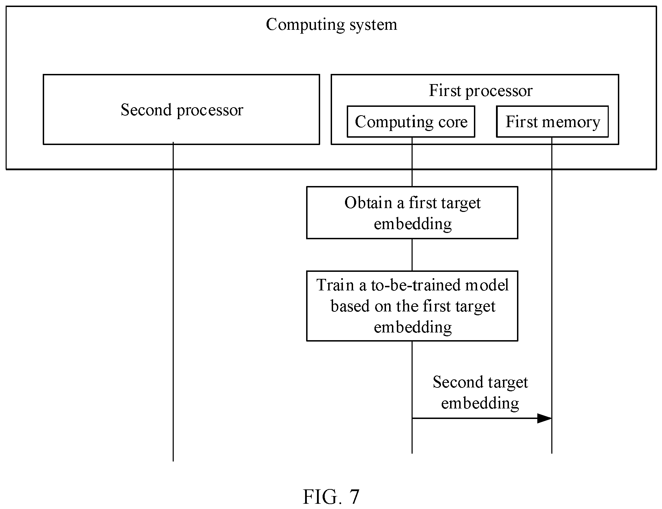

Refer to FIG. 7. In this embodiment of this application, the computing core may write the updated to-be-trained model and the updated embeddings (including the second target embedding) to the first memory.

If the first target embedding is further an embedding required for model training of a next batch, the computing core may directly obtain the updated first target embedding (namely, the second target embedding) from the first memory. If some embeddings required for model training of an (M + 1)^{th} batch are not stored in the first memory, the second processor may transfer these embeddings to the first memory.

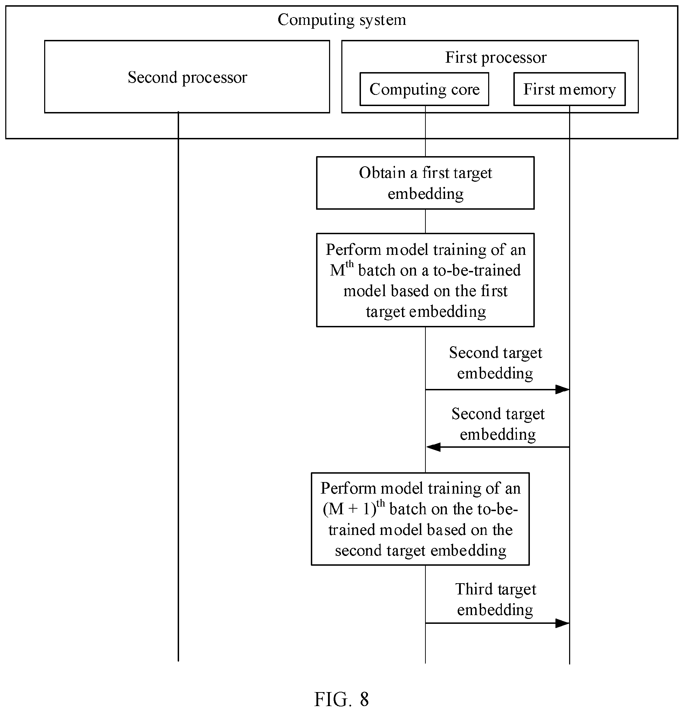

Refer to FIG. 8. Specifically, the first target embedding is an embedding required for model training of the M^{th} batch and the (M + 1)^{th} batch. M is a positive integer greater than 1. The computing core may perform model training of the M^{th} batch on the to-be-trained model based on the first target embedding. When model training of the (M + 1)^{th} batch is performed, the computing core obtains the second target embedding from the first memory, and performs model training of the (M + 1)^{th} batch on the updated to-be-trained model based on the second target embedding, to obtain the third target embedding. Then, the computing core writes the third target embedding to the first memory.

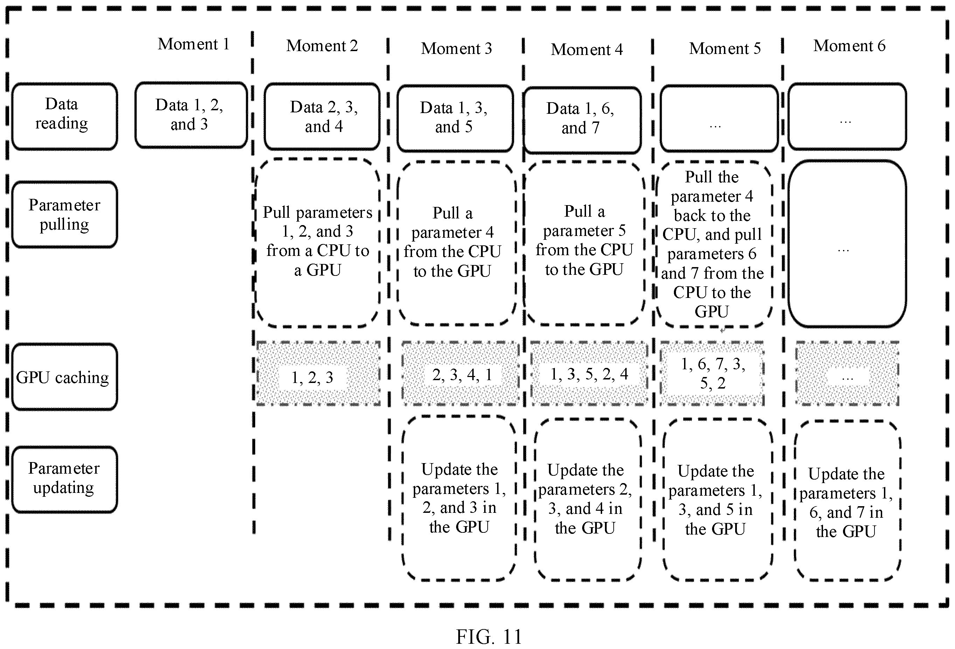

For example, the first processor is a GPU, and the second processor is a CPU. As shown in FIG. 11, it is assumed that a size of the first memory of the GPU is 6. At a start stage of model training, at a moment 1, the CPU may determine that embeddings required for model training of a next batch are an embedding 1, an embedding 2, and an embedding 3 (data 1, 2, and 3 are shown in FIG. 11).

At a moment 2, the CPU may transmit the data 1, 2, and 3 to the first memory of the GPU.

At a moment 3, the computing core of the GPU may complete model training based on the data 1, 2, and 3. The CPU may determine that embeddings required for model training of a next batch are the data 2, the data 3, and data 4. Because the data 4 is not stored in the first memory and the first memory has sufficient available storage space, the CPU may transfer the data 4 to the first memory of the GPU.

At a moment 4, the computing core of the GPU may complete model training based on the data 2, 3, and 4. The CPU may determine that embeddings required for model training of a next batch are the data 1, the data 3, and data 5. Because the data 5 is not stored in the first memory and the first memory has sufficient available storage space, the CPU may transfer the data 5 to the first memory of the GPU.

At a moment 5, the computing core of the GPU may complete model training based on the data 1, 3, and 5, and the CPU may determine that embeddings required for model training of a next batch are the data 1, data 6, and data 7. Because the data 6 and the data 7 are not stored in the first memory and the first memory has insufficient available storage space (lacking space for storing one embedding), the CPU may delete the data 4 and return the data 4 to the second memory of the CPU. In this way, and the CPU may transfer the data 6 and the data 7 to the first memory of the GPU.

At a moment 6, the computing core of the GPU may complete model training based on the data 1, 6, and 7.

It can be learned that, in this embodiment of this application, after updating the first target embedding, the first processor saves the second target embedding to the first memory of the first processor. Without needing to wait for the second processor to complete a process of transferring the second target embedding to the GPU, the first processor may directly obtain the second target embedding and perform model training based on the second target embedding, provided that the first processor may obtain a latest updated embedding (the second target embedding). Throughput of training data is increased, and a model training speed is improved.

In addition, in a process of model training of a previous batch, the second processor transfers embeddings that are not stored in the first memory and that are required for model training of a next batch to the first memory. In this way, the computing core of the second processor may obtain all embeddings required for model training of the next batch from the first memory.

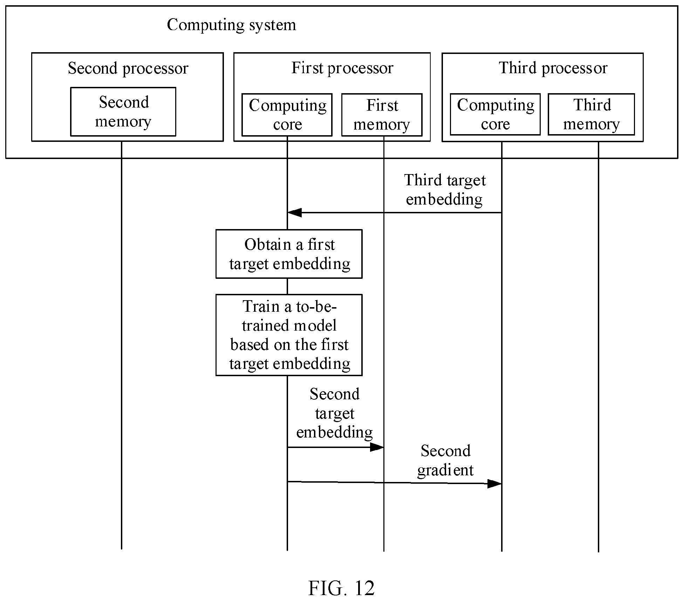

Refer to FIG. 12. In a scenario in which a plurality of computing nodes are included, each computing node may be responsible for a part of embeddings required for model training of a current batch, and is responsible for updating a part of embeddings. In a possible implementation, the computing core needs to obtain the third target embedding from the third memory of the third processor of another server node and perform the feedforward process in the model training process based on the first target embedding and the third target embedding. However, during an update, the computing core of the first processor needs to update the first target embedding only based on the first gradient.

Specifically, in the model training process, the computing core may process the first target embedding and the third target embedding by using the to-be-trained model, to obtain a target output, and determine the first gradient and the second gradient based on the target output. The computing core may update the to-be-trained model and the first target embedding based on the first gradient, and transfer the second gradient to a computing core of the third processor, so that the computing core of the third processor updates the third target embedding based on the second gradient.

In an implementation, data communication (for example, allreduce communication) between the first processor and the third processor may be used to synchronize gradients of embeddings, so that the third processor may obtain the second gradient obtained through computation by the first processor after model training of the current batch. Then, the third processor may update an embedding (the third target embedding) for which the third processor is responsible based on the second gradient.

For example, each server node has three features, and embeddings required for model training of the current batch are [1, 2, 3, 3, 2, 4]. It should be understood that 1 herein may represent the embedding 1, 2 may represent the embedding 2, 3 may represent the embedding 3, and 4 may represent the embedding 4. The first three belong to a first server node, and the last three belong to a second server node. Each server node reads data [1, 2, 3, 3, 2, 4]. The CPU may transmit [0, 1, 2] to a GPU node 1, and [2, 1, 3] to a GPU node 2.

In this case, the embedding 2 and the embedding 4 are stored in the first memory of the GPU node 1, the embedding 1 and the embedding 3 are stored in the first memory of the GPU node 2, and embedding data of the two GPU nodes is exchanged by using data communication (for example, allreduce communication) between GPUs, and each GPU may obtain E = [1, 2, 3, 4].

Specifically, data communication (for example, allreduce communication) between GPUs may be used to synchronize gradients of embeddings, so that each GPU may obtain gradients obtained through computation by all GPU nodes in the current batch. Then, each GPU node may update embeddings for which the GPU node is responsible. For example, the GPU node 1 is responsible for updating parameters of a feature 2 and a feature 4.

Then, based on an implementation result, the model training method provided in this embodiment of this application is verified.

Specifically, a TB-level Criteo dataset may be used for verification. Through feature filtering, 10 GB embedding table data (33 million feature IDs) and 100 GB embedding table data (330 million feature IDs) are constructed. A test model is a DeepFM model. In a lab hardware environment, each server has two CPUs with two 18 cores and 36 threads and eight V100 cards with 32 GB memory. GPUs are interconnected through PCIe. Servers are connected through 100 Gbit/s RDMA. Each server has about 1 TB memory.

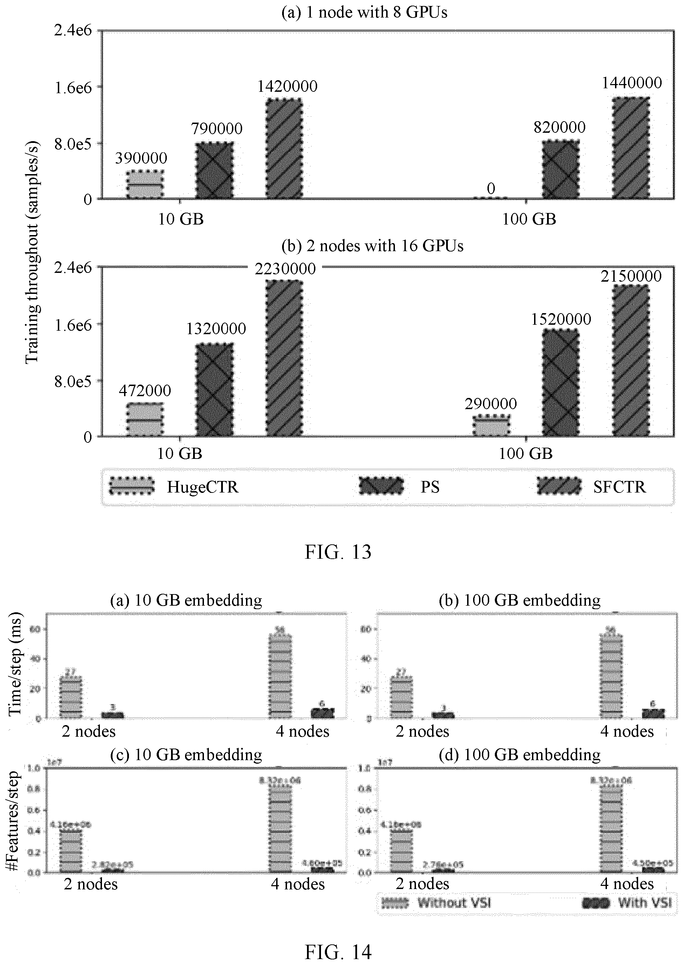

As shown in FIG. 13, for a throughput experiment, a higher training throughput is obtained in this embodiment of this application. In a 10 GB model, the training throughput is 4.7 times and 1.7 times that of a HugeCTR and a parameter server (PS), respectively. In a 100 GB model, the training throughput is 7.4 times and 1.4 times that of the HugeCTR and the parameter server, respectively.

As shown in FIG. 14, after a deduplication operation is added, communication traffic between the GPU and the CPU and between the GPU and the GPU is greatly reduced.

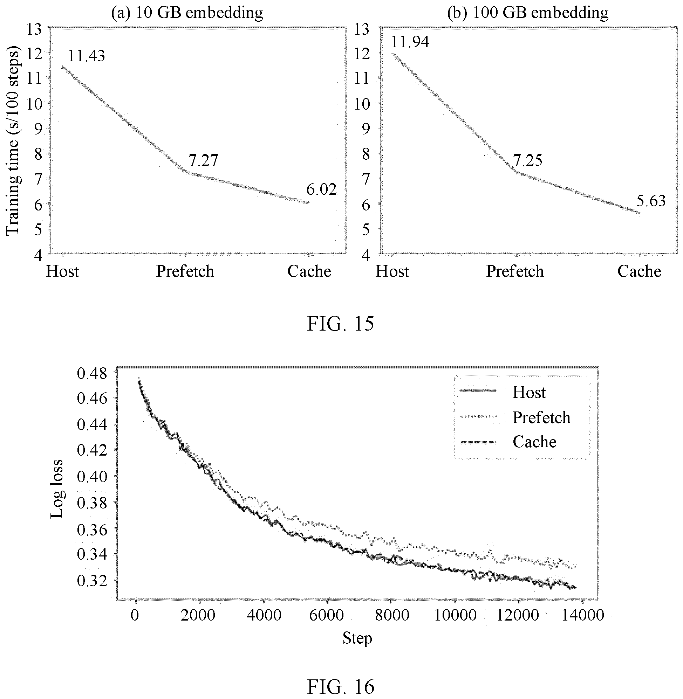

As shown in FIG. 15, compared with a conventional prefetch technology and the parameter server (Host), it may be found that a training speed in this embodiment of this application is the fastest. In FIG. 16, model convergence curves of the three technologies are compared. It can be found that a convergence speed of this embodiment (corresponding to a Cache curve) of this application is the fastest.

The following describes the model training method in this embodiment of this application from a perspective of a software module.

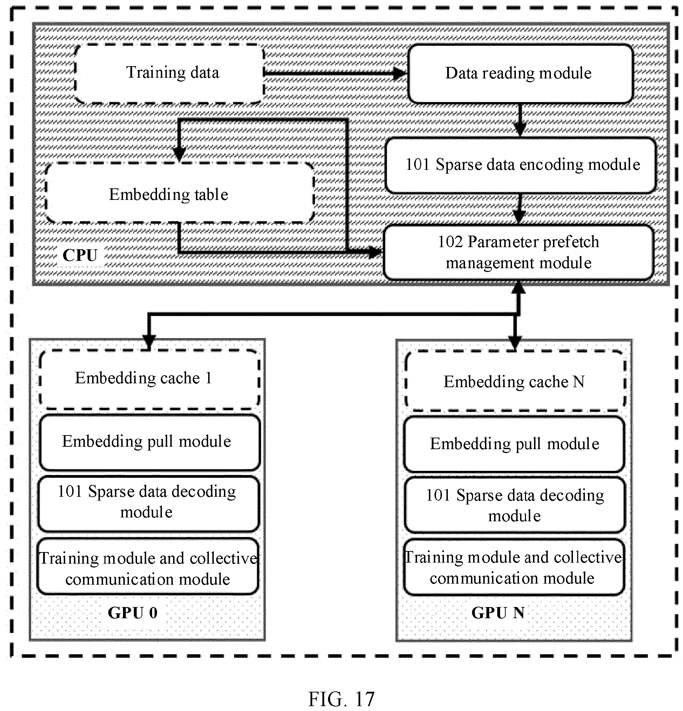

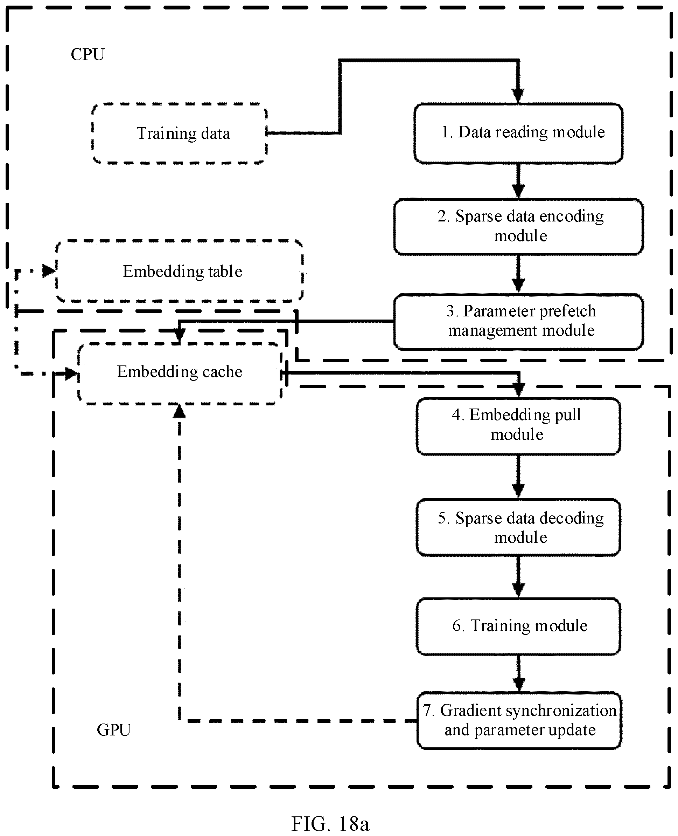

Refer to FIG. 17 and FIG. 18a. Training data (embeddings) is stored in a hard disk or another storage location of a CPU node, and an embedding table is stored in a memory of the CPU. A data reading module may be configured to read training samples. A sparse data encoding and compression module is configured to perform a deduplication operation (or referred to as compression encoding) on training samples of a current batch, and output a target vector mask and a second vector. A parameter prefetch management module may maintain a cache and maintain an embedding table in the CPU. Therefore, the parameter prefetch management module may support an embedding table of an ultra-large scale. There is one backup for the to-be-trained model on each GPU node. The GPU may include an embedding cache (cache), and each GPU has one cache to cache a part of embeddings. An embedding pull module is configured to obtain the second vector. A sparse data decoding module is configured to obtain, based on the target vector mask and the second vector, embeddings (a first vector) required for forward computation. A training module is configured to perform forward and reverse gradient computation and update parameters. A collective communication module is configured to synchronize the to-be-trained model and gradient information of embeddings.

Embodiments of this application provide a model training method, applied to a first processor. The first processor is communicatively connected to a second processor, and the first processor includes a computing core and a first memory. The second processor includes a second memory. The first processor and the second processor are processors of different types. The method includes: The computing core obtains a first target embedding from the second memory. The computing core trains a to-be-trained model based on the first target embedding, to obtain an updated to-be-trained model and a second target embedding. The second target embedding is an updated first target embedding. The computing core writes the second target embedding to the first memory. In the foregoing manner, after updating an embedding, the first processor saves the updated embedding to the first memory of the first processor. Without needing to wait for the second processor to complete a process of transferring the second target embedding to a GPU, the first processor may directly obtain the updated embedding and perform model training of a next round based on the updated embedding, provided that the first processor may obtain a latest updated embedding. This application can improve a speed for processing training data by the processor during model training.

The foregoing describes the model training method in embodiments of this application with the first processor executing the method. The following describes the model training method in embodiments of this application with the second processor executing the method.

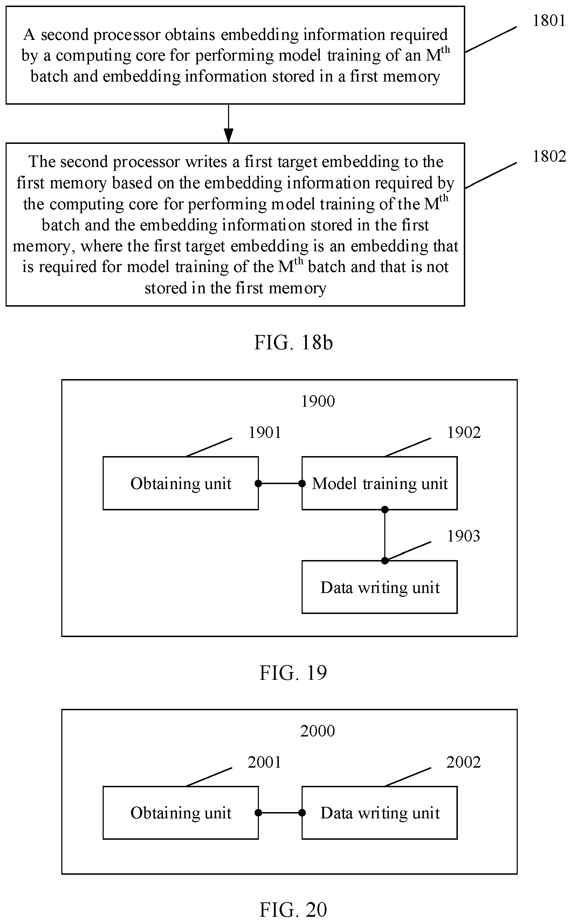

FIG. 18b is a schematic flowchart of a model training method according to an embodiment of this application. As shown in FIG. 18b, the model training method provided in this embodiment of this application is applied to a second processor. The second processor is communicatively connected to a first processor. The first processor includes a computing core and a first memory. The second processor includes a second memory. The first processor and the second processor are processors of different types. The method includes the following steps.

1801: The second processor obtains embedding information required by the computing core for performing model training of an M^{th} batch and embedding information stored in the first memory, where M is a positive integer greater than 1.

The embedding information required for model training of the M^{th} batch may indicate embeddings required for model training of the M^{th} batch. For example, the information may be but is not limited to identification information indicating the embeddings.

1802: The second processor writes a first target embedding to the first memory based on the embedding information required by the computing core for performing model training of the M^{th} batch and the embedding information stored in the first memory, where the first target embedding is an embedding that is required for model training of the M^{th} batch and that is not stored in the first memory.

If model training to be performed currently is model training of the M^{th} batch, the second processor may determine whether the embeddings required for model training of the M^{th} batch are stored in the first memory. If the second processor determines that some or all of the embeddings required for model training of the M^{th} batch are not stored in the first memory, the second processor may obtain embeddings that are not stored in the first memory and that are required for model training from the second memory and transfer the embeddings that are not stored in the first memory and that are required for model training to the first memory.

For example, the embeddings required for model training of the M^{th} batch include the first target embedding. If the second processor determines that the first target embedding is not stored in the first memory, the second processor may write the first target embedding from the second memory to the cache.

At a time point of writing the first target embedding, the second processor may write the first target embedding from the second memory to the first memory in a process during which the computing core performs model training of an (M - 1)^{th} batch on a to-be-trained model.

In a possible implementation, before the first target embedding is written to the first memory, when available storage space of the first memory is less than storage space required for storing the first target embedding, the second processor deletes at least one embedding from the first memory, and writes the at least one embedding to the second memory. The at least one embedding is an embedding that is not required for model training of the M^{th} batch.

Storage space of the first memory is limited. If the available storage space of the first memory is less than the storage space required for storing the first target embedding, the second processor needs to delete at least one embedding stored in the first memory, so that the first memory has sufficient space to store embeddings transferred from the second processor.

For example, the embeddings required for model training of the M^{th} batch include the first target embedding, an embedding 1, an embedding 2, and an embedding 3. The embedding 3, an embedding 4, and an embedding 5 are stored in the first memory, and the first target embedding, the embedding 1, and the embedding 2 are not stored in the first memory. Four embeddings may be stored in the first memory. Therefore, the available storage space (1) of the first memory is less than the storage space (3) required for storing the first target embedding. In this way, two embeddings (including the embedding 4 and the embedding 5) stored in the first memory may be deleted, so that the first memory has sufficient space to store the embeddings (including the first target embedding, the embedding 1, and the embedding 2) transferred from the second processor.

To ensure parameter consistency, the computing core may further write a deleted embedding to the second memory. In this way, when the second processor transfers an embedding to the first memory of the first processor next time, the transferred embedding is a latest updated embedding. Specifically, the second processor may write at least one embedding to the second memory.

Specifically, an embedding that needs to be deleted is definitely not an embedding required for model training of the current batch. Otherwise, if an embedding required for model training of the current batch is deleted, the second processor needs additional time to transfer the embedding to the first memory of the first processor.

In addition, in a model training process of the to-be-trained model, an embedding that is not used for a longest time in the plurality of embeddings is selected as the to-be-deleted embedding. In the model training process of the to-be-trained model, the embedding that is not used for a longest time in the plurality of embeddings may be considered as an infrequently used embedding. After these embeddings are deleted, embeddings required for model training in a subsequent long time may not include these embeddings. This reduces a frequency of transmitting data by the second processor to the first processor. In this selection manner, data transmission overheads from the second processor to the first processor may be reduced, and communication traffic of a computing system is reduced, thereby further improving a model training speed of the system.

In a possible implementation, before the first target embedding is written to the first memory, the second processor may obtain a first vector and a target vector. The first vector indicates the embeddings required for model training of the M^{th} batch, each element in the first vector indicates one embedding, and different elements indicate different embeddings. The target vector indicates permutations of the embeddings indicated by the elements in the first vector when model training of the M^{th} batch is performed, and the embedding indicated by each element appears at least once in the permutations. Then, the second processor may transfer the first vector and the target vector to the first processor.

For specific descriptions of the first vector and the target vector, reference may be made to related descriptions in the embodiment corresponding to FIG. 5. Details are not described herein again.

In a possible implementation, the first processor is a graphics processing unit GPU, an embedded neural network processing unit NPU, or a tensor processing unit TPU, the first memory is a cache, and the second processor is a central processing unit CPU.

FIG. 19 shows a model training apparatus according to an embodiment of this application. The model training apparatus is applied to a first processor. The first processor is communicatively connected to a second processor. The first processor includes a computing core and a first memory. The second processor includes a second memory. The first processor and the second processor are processors of different types. A computing core 1900 includes an obtaining unit 1901, a model training unit 1902, and a data writing unit 1903.

The obtaining unit 1901 is configured to obtain a first target embedding from the second memory.

For a specific description of the obtaining unit 1901, reference may be made to a description of the step 501. Details are not described herein again.

The model training unit 1902 is configured to train a to-be-trained model based on the first target embedding, to obtain an updated to-be-trained model and a second target embedding. The second target embedding is an updated first target embedding.

For a specific description of the model training unit 1902, reference may be made to a description of the step 502. Details are not described herein again.

The data writing unit 1903 is configured to write the second target embedding to the first memory.

For a specific description of the data writing unit 1903, reference may be made to a description of the step 503. Details are not described herein again.

In a possible implementation, the model training unit is further configured to:
after model training of an (M + 1)^{th} batch is performed on the updated to-be-trained model based on the second target embedding, obtain a third target embedding. The third target embedding is an updated second target embedding.

The data writing unit is further configured to write the third target embedding to the first memory.

In a possible implementation, when the first target embedding is an embedding required for model training of the M^{th} batch, and the first target embedding is not stored in the first memory, the first memory obtains the first target embedding from the second memory.

The obtaining unit is specifically configured to:
obtain the first target embedding from the first memory.

In a possible implementation, that the first memory obtains the first target embedding from the second memory includes:
in a process during which the computing core performs model training of an (M - 1)^{th} batch on the to-be-trained model, the first memory obtains the first target embedding from the second memory.

In a possible implementation, the obtaining unit is further configured to: before the computing core obtains the first target embedding from the first memory, obtain a first vector and a target vector that are from the second processor, where the first vector indicates embeddings required for model training of the M^{th} batch, each element in the first vector indicates one embedding, and different elements indicate different embeddings; and the target vector indicates permutations of the embeddings indicated by the elements in the first vector when model training of the M^{th} batch is performed, and the embedding indicated by each element appears at least once in the permutations;
obtain, based on the first vector, the embeddings required for model training of the M^{th} batch from the first memory; and
determine, based on the target vector and the embeddings required for model training of the M^{th} batch, the permutations of the embeddings required for model training of the M^{th} batch.

In a possible design, the obtaining unit is further configured to:
before the computing core trains the to-be-trained model based on the first target embedding, obtain the third target embedding from a third memory of a third processor. The third target embedding and the first target embedding are embeddings required for model training of the M^{th} batch, and the first processor and the third processor are processors of a same type.

The model training unit is specifically configured to:
process the first target embedding and the third target embedding by using the to-be-trained model, to obtain a target output, and determine a first gradient based on the target output; and
update the to-be-trained model and the first target embedding based on the first gradient.

In a possible implementation, the model training unit is specifically configured to:
determine the first gradient and a second gradient based on the target output.

The computing core further includes a second data transfer unit, configured to, after the first gradient and the second gradient are determined based on the target output, transfer the second gradient to a computing core of the third processor, so that the computing core of the third processor updates the third target embedding based on the second gradient.

In a possible implementation, the first processor is a graphics processing unit GPU, an embedded neural network processing unit NPU, or a tensor processing unit TPU, the first memory is a cache, and the second processor is a central processing unit CPU.

Refer to FIG. 20. This application further provides a model training apparatus, applied to a second processor. The second processor is communicatively connected to a first processor. The first processor includes a computing core and a first memory. The second processor includes a second memory. The first processor and the second processor are processors of different types. An apparatus 2000 includes an obtaining unit 2001 and a data writing unit 2002.

The obtaining unit 2001 is configured to obtain embedding information required by the computing core for performing model training of an M^{th} batch and embedding information stored in the first memory. M is a positive integer greater than 1.

For a specific description of the obtaining unit 2001, reference may be made to a description of the step 1801. Details are not described herein again.

The data writing unit 2002 is configured to write a first target embedding to the first memory based on the embedding information required by the computing core for performing model training of the M^{th} batch and the embedding information stored in the first memory. The first target embedding is an embedding that is required for model training of the M^{th} batch and that is not stored in the first memory.

For a specific description of the data writing unit 2002, reference may be made to a description of the step 1802. Details are not described herein again.

In a possible implementation, the data writing unit is configured to write the first target embedding to the first memory in a process during which the computing core performs model training of an (M - 1)^{th} batch on a to-be-trained model.

In a possible implementation, the data writing unit is further configured to: before the first target embedding is written to the first memory, delete at least one embedding from the first memory and write the at least one embedding to the second memory when available storage space of the first memory is less than storage space required for storing the first target embedding. The at least one embedding is an embedding that is not required for model training of the M^{th} batch.

In a possible implementation, the obtaining unit is further configured to obtain a first vector and a target vector before the first target embedding is written to the first memory. The first vector indicates embeddings required for model training of the M^{th} batch, each element in the first vector indicates one embedding, and different elements indicate different embeddings. The target vector indicates permutations of the embeddings indicated by the elements in the first vector when model training of the M^{th} batch is performed, and the embedding indicated by each element appears at least once in the permutations.

The data writing unit is further configured to transfer the first vector and the target vector to the first processor.

In a possible implementation, the first processor is a graphics processing unit GPU, an embedded neural network processing unit NPU, or a tensor processing unit TPU, the first memory is a cache, and the second processor is a central processing unit CPU.

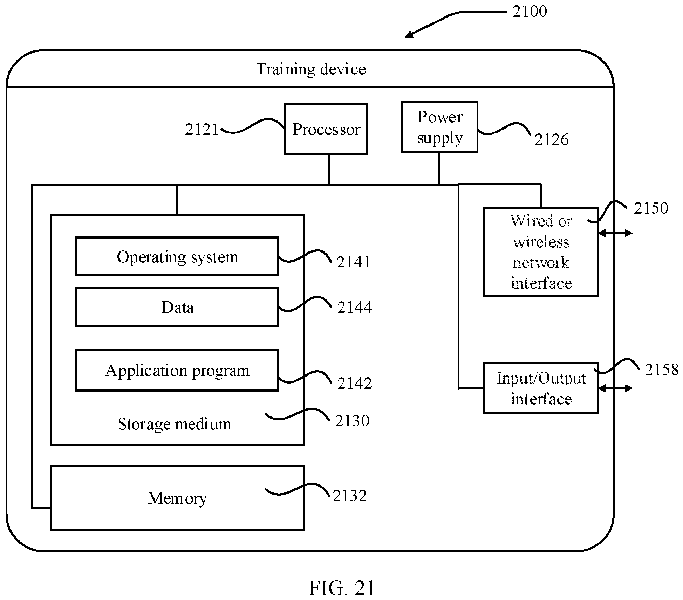

An embodiment of this application further provides a training device. FIG. 21 is a schematic diagram of a structure of a training device according to an embodiment of this application. Specifically, a training device 2100 is implemented by one or more servers. The training device 2100 may differ greatly due to different configurations or performance, and may include one or more processors (central processing units, CPUs) 2121 (for example, one or more processors), a memory 2132, and one or more storage media 2130 (for example, one or more massive storage devices) that store an application program 2142 or data 2144. The memory 2132 and the storage medium 2130 may be transient storage or persistent storage. A program stored in the storage medium 2130 may include one or more modules (not shown in the figure), and each module may include a series of instruction operations for the training device. Further, the processor 2121 may be configured to communicate with the storage medium 2130, and perform, on the training device 2100, the series of instruction operations in the storage medium 2130.

The processor may be the first processor or the second processor in embodiments of this application.

The training device 2100 may further include one or more power supplies 2126, one or more wired or wireless network interfaces 2150, one or more input/output interfaces 2158, or one or more operating systems 2141, such as Windows Server^{™}, Mac OS X^{™}, Unix^{™}, Linux^{™}, and FreeBSD^{™}.

Specifically, the training device may perform the model training method in the embodiments corresponding to FIG. 5 and FIG. 18b.

An embodiment of this application further provides a computer program product. When the computer program product is run on a computer, the computer is enabled to perform steps performed by the foregoing execution device or steps performed by the foregoing training device.

An embodiment of this application further provides a computer-readable storage medium. A program used for signal processing is stored in the computer-readable storage medium. When the program is run on a computer, the computer is enabled to perform steps performed by the foregoing execution device or steps performed by the foregoing training device.

The execution device, the training device, or the terminal device in embodiments of this application may be specifically a chip. The chip includes a processing unit and a communication unit. The processing unit may be, for example, a processor, and the communication unit may be, for example, an input/output interface, a pin, or a circuit. The processing unit may execute computer-executable instructions stored in a storage unit, so that a chip in the execution device performs the data processing method described in the foregoing embodiments, or a chip in the training device performs the data processing method described in the foregoing embodiments. Optionally, the storage unit is a storage unit in the chip, for example, a register or a cache. Alternatively, the storage unit may be a storage unit in a wireless access device but outside the chip, for example, a read-only memory (read-only memory, ROM), another type of static storage device that can store static information and instructions, or a random access memory (random access memory, RAM).

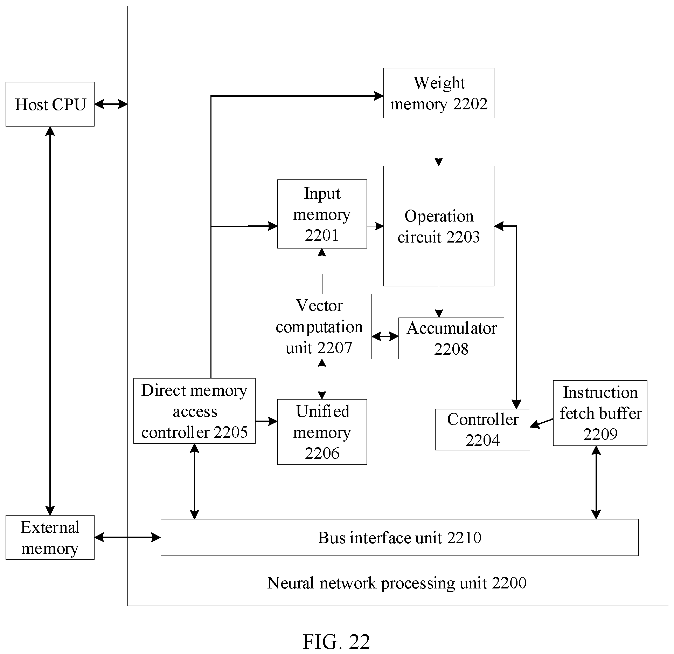

For details, refer to FIG. 22. FIG. 22 is a schematic diagram of a structure of a chip according to an embodiment of this application. The chip may be represented as a neural network processing unit NPU 2200. The NPU 2200 is mounted to a host CPU (Host CPU) as a coprocessor, and the host CPU allocates a task to the NPU 2200. A core part of the NPU is an operation circuit 2203, and a controller 2204 controls the operation circuit 2203 to extract vector data in a memory and perform a multiplication operation.

The NPU 2200 may be the first processor in embodiments of this application.

In some implementations, the operation circuit 2203 includes a plurality of processing units (Process Engines, PEs) inside. In some implementations, the operation circuit 2203 is a two-dimensional systolic array. The operation circuit 2203 may alternatively be a one-dimensional systolic array or another electronic circuit capable of performing mathematical operations such as multiplication and addition. In some implementations, the operation circuit 2203 is a general-purpose vector processor.

For example, it is assumed that there are an input vector A, a weight vector B, and an output vector C. The operation circuit fetches data corresponding to the vector B from a weight memory 2202, and buffers the data on each PE in the operation circuit. The operation circuit fetches data corresponding to the vector A from the input memory 2201, and performs a vector operation on the vector A and the vector B. A partial vector result or a final vector result obtained is stored in an accumulator (accumulator) 2208.

A unified memory 2206 is configured to store input data and output data. Weight data is directly transferred to the weight memory 2202 through a direct memory access controller (Direct Memory Access Controller, DMAC) 2205. The input data is also transferred to the unified memory 2206 through the DMAC.

A BIU is a bus interface unit, namely, a bus interface unit 2210, and is used for interaction between an AXI bus and the DMAC and between the AXI bus and an instruction fetch buffer (Instruction Fetch Buffer, IFB) 2209.

The bus interface unit (bus interface unit, BIU) 2210 is used by the instruction fetch buffer 2209 to obtain instructions from an external memory, and is further used by the direct memory access controller 2205 to obtain original data of the input vector A or the weight vector B from the external memory.

The DMAC is mainly configured to transfer input data in the external memory DDR to the unified memory 2206, transfer weight data to the weight memory 2202, or transfer input data to the input memory 2201.

A vector computation unit 2207 includes a plurality of operation processing units, and if necessary, performs further processing such as vector multiplication, vector addition, an exponential operation, a logarithmic operation, or value comparison on an output of the operation circuit 2203. The vector computation unit 2207 is mainly configured to perform network computation, such as batch normalization (batch normalization), pixel-level summation, and upsampling on a feature plane, at a non-convolutional/fully connected layer in a neural network.

In some implementations, the vector computation unit 2207 can save a processed output vector to the unified memory 2206. For example, the vector computation unit 2207 may apply a linear function or a nonlinear function to the output of the operation circuit 2203, for example, performs linear interpolation on a feature plane extracted at a convolutional layer. For another example, the vector computation unit 2207 may apply a linear function or a nonlinear function to a vector of an accumulated value, to generate an activation value. In some implementations, the vector computation unit 2207 generates a normalized value, a pixel-level summation value, or both. In some implementations, the processed output vector can be used as an activation input to the operation circuit 2203, for example, to be used at a subsequent layer in the neural network.

The instruction fetch buffer (instruction fetch buffer) 2209 connected to the controller 2204 is configured to store instructions used by the controller 2204.

The unified memory 2206, the input memory 2201, the weight memory 2202, and the instruction fetch buffer 2209 are all on-chip memories. The external memory is private for a hardware architecture of the NPU.

The processor mentioned above may be a general-purpose central processing unit, a microprocessor, an ASIC, or one or more integrated circuits for controlling program execution.

In addition, it should be noted that the apparatus embodiments described above are merely examples. The units described as separate parts may or may not be physically separated, and parts displayed as units may or may not be physical units, that is, may be located in one location, or may be distributed on a plurality of network units. Some or all modules may be selected according to an actual need to achieve the objectives of the solutions of the embodiments. In addition, in the accompanying drawings of the apparatus embodiments provided in this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, or the like. Usually, any function implemented by a computer program may be easily implemented by using corresponding hardware. In addition, specific hardware structures used to implement a same function may be various, for example, an analog circuit, a digital circuit, or a dedicated circuit. However, in this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for enabling a computer device (which may be a personal computer, a training device, a network device, or the like) to perform the method in embodiments of this application.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, all or some procedures or functions in embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state drive (Solid State Drive, SSD)), or the like.

## Claims

1. A model training method, applied to a first processor, wherein the first processor is communicatively connected to a second processor, the first processor comprises a computing core and a first memory, the second processor comprises a second memory, and the first processor and the second processor are processors of different types; and the method comprises:
obtaining, by the computing core, a first target embedding from the second memory;
training, by the computing core, a to-be-trained model based on the first target embedding, to obtain an updated to-be-trained model and a second target embedding, wherein the second target embedding is an updated first target embedding; and
writing, by the computing core, the second target embedding to the first memory.

2. The method according to claim 1, wherein the training, by the computing core, a to-be-trained model based on the first target embedding comprises:
performing, by the computing core, model training of an M^{th} batch on the to-be-trained model based on the first target embedding, wherein M is a positive integer greater than 1; and
after the writing, by the computing core, the second target embedding to the first memory, the method further comprises:
obtaining, by the computing core, the second target embedding from the first memory; and
performing, by the computing core, model training of an (M + 1)^{th} batch on the updated to-be-trained model based on the second target embedding.

3. The method according to claim 2, wherein the method further comprises:
after the performing, by the computing core, model training of an (M + 1)^{th} batch on the updated to-be-trained model based on the second target embedding, obtaining a third target embedding, wherein the third target embedding is an updated second target embedding; and
writing, by the computing core, the third target embedding to the first memory.

4. The method according to any one of claims 1 to 3, wherein the obtaining, by the computing core, a first target embedding from the second memory comprises:
when the first target embedding is an embedding required for model training of the M^{th} batch and the first target embedding is not stored in the first memory, obtaining, by the first memory, the first target embedding from the second memory; and
obtaining, by the computing core, the first target embedding from the first memory.

5. The method according to claim 4, wherein the obtaining, by the first memory, the first target embedding from the second memory comprises:
in a process during which the computing core performs model training of an (M - 1)^{th} batch on the to-be-trained model, obtaining, by the first memory, the first target embedding from the second memory.

6. The method according to claim 4 or 5, wherein the method further comprises:
before the obtaining, by the computing core, the first target embedding from the first memory, obtaining, by the computing core, a first vector and a target vector that are from the second processor, wherein the first vector indicates embeddings required for model training of the M^{th} batch, each element in the first vector indicates one embedding, and different elements indicate different embeddings; and the target vector indicates permutations of the embeddings indicated by the elements in the first vector when model training of the M^{th} batch is performed, and the embedding indicated by each element appears at least once in the permutations; and
the obtaining, by the computing core, the first target embedding from the first memory comprises:
obtaining, by the computing core, based on the first vector, the embeddings required for model training of the M^{th} batch from the first memory; and
determining, by the computing core, based on the target vector and the embeddings required for model training of the M^{th} batch, the permutations of the embeddings required for model training of the M^{th} batch.

7. The method according to any one of claims 1 to 6, wherein before the training, by the computing core, a to-be-trained model based on the first target embedding, the method further comprises:
obtaining, by the computing core, the third target embedding from a third memory of a third processor, wherein the third target embedding and the first target embedding are embeddings required for model training of the M^{th} batch, and the first processor and the third processor are processors of a same type; and
the training, by the computing core, a to-be-trained model based on the first target embedding comprises:
processing, by the computing core, the first target embedding and the third target embedding by using the to-be-trained model, to obtain a target output, and determining a first gradient based on the target output; and
updating, by the computing core, the to-be-trained model and the first target embedding based on the first gradient.

8. The method according to claim 7, wherein the determining a first gradient based on the target output comprises: determining the first gradient and a second gradient based on the target output; and
after the determining the first gradient and a second gradient based on the target output, the method further comprises:
transferring the second gradient to a computing core of the third processor, so that the computing core of the third processor updates the third target embedding based on the second gradient.

9. The method according to any one of claims 1 to 8, wherein the first processor is a graphics processing unit GPU, an embedded neural network processing unit NPU, or a tensor processing unit TPU, the first memory is a cache, and the second processor is a central processing unit CPU.

10. A model training method, applied to a second processor, wherein the second processor is communicatively connected to a first processor, the first processor comprises a computing core and a first memory, the second processor comprises a second memory, and the first processor and the second processor are processors of different types; and the method comprises:
obtaining, by the second processor, embedding information required by the computing core for performing model training of an M^{th} batch and embedding information stored in the first memory, wherein M is a positive integer greater than 1; and
writing, by the second processor, a first target embedding to the first memory based on the embedding information required by the computing core for performing model training of the M^{th} batch and the embedding information stored in the first memory, wherein the first target embedding is an embedding that is required for model training of the M^{th} batch and that is not stored in the first memory.

11. The method according to claim 10, wherein the writing a first target embedding to the first memory comprises:
in a process during which the computing core performs model training of an (M - 1)^{th} batch on a to-be-trained model, writing the first target embedding to the first memory.

12. The method according to claim 10 or 11, wherein before the writing a first target embedding to the first memory, the method further comprises:
when available storage space of the first memory is less than storage space required for storing the first target embedding, deleting, by the second processor, at least one embedding from the first memory, and writing the at least one embedding to the second memory, wherein the at least one embedding is an embedding that is not required for model training of the M^{th} batch.

13. The method according to any one of claims 10 to 12, wherein the method further comprises:
before the writing a first target embedding to the first memory, obtaining, by the second processor, a first vector and a target vector, wherein the first vector indicates embeddings required for model training of the M^{th} batch, each element in the first vector indicates one embedding, and different elements indicate different embeddings; and the target vector indicates permutations of the embeddings indicated by the elements in the first vector when model training of the M^{th} batch is performed, and the embedding indicated by each element appears at least once in the permutations; and
transferring, by the second processor, the first vector and the target vector to the first processor.

14. The method according to any one of claims 10 to 13, wherein the first processor is a graphics processing unit GPU, an embedded neural network processing unit NPU, or a tensor processing unit TPU, the first memory is a cache, and the second processor is a central processing unit CPU.

15. A model training apparatus, applied to a first processor, wherein the first processor is communicatively connected to a second processor, the first processor comprises a computing core and a first memory, the second processor comprises a second memory, the first processor and the second processor are processors of different types, and the computing core comprises:
an obtaining unit, configured to obtain a first target embedding from the second memory;
a model training unit, configured to train a to-be-trained model based on the first target embedding, to obtain an updated to-be-trained model and a second target embedding, wherein the second target embedding is an updated first target embedding; and
a data writing unit, configured to write the second target embedding to the first memory.

16. The apparatus according to claim 15, wherein the model training unit is configured to perform model training of an M^{th} batch on the to-be-trained model based on the first target embedding, and M is a positive integer greater than 1;
the obtaining unit is configured to obtain the second target embedding from the first memory after the computing core writes the second target embedding to the first memory; and
the model training unit is further configured to:
perform model training of an (M + 1)^{th} batch on the updated to-be-trained model based on the second target embedding.

17. The apparatus according to claim 16, wherein the model training unit is further configured to:
after performing model training of the (M + 1)^{th} batch on the updated to-be-trained model based on the second target embedding, obtain a third target embedding, wherein the third target embedding is an updated second target embedding; and
the data writing unit is further configured to write the third target embedding to the first memory.

18. The apparatus according to any one of claims 15 to 17, wherein when the first target embedding is an embedding required for model training of the M^{th} batch and the first target embedding is not stored in the first memory, the first memory obtains the first target embedding from the second memory; and
the obtaining unit is specifically configured to:
obtain the first target embedding from the first memory.

19. The apparatus according to claim 18, wherein that the first memory obtains the first target embedding from the second memory comprises:
in a process during which the computing core performs model training of an (M - 1)^{th} batch on the to-be-trained model, the first memory obtains the first target embedding from the second memory.

20. The apparatus according to claim 18 or 19, wherein the obtaining unit is further configured to: before the computing core obtains the first target embedding from the first memory, obtain a first vector and a target vector that are from the second processor, wherein the first vector indicates embeddings required for model training of the M^{th} batch, each element in the first vector indicates one embedding, and different elements indicate different embeddings; and the target vector indicates permutations of the embeddings indicated by the elements in the first vector when model training of the M^{th} batch is performed, and the embedding indicated by each element appears at least once in the permutations;
obtain, based on the first vector, the embeddings required for model training of the M^{th} batch from the first memory; and
determine, based on the target vector and the embeddings required for model training of the M^{th} batch, the permutations of the embeddings required for model training of the M^{th} batch.

21. The apparatus according to any one of claims 15 to 20, wherein the obtaining unit is further configured to:
before the computing core trains the to-be-trained model based on the first target embedding, obtain the third target embedding from a third memory of a third processor, wherein the third target embedding and the first target embedding are embeddings required for model training of the M^{th} batch, and the first processor and the third processor are processors of a same type; and
the model training unit is specifically configured to:
process the first target embedding and the third target embedding by using the to-be-trained model, to obtain a target output, and determine a first gradient based on the target output; and
update the to-be-trained model and the first target embedding based on the first gradient.

22. The apparatus according to claim 21, wherein the model training unit is specifically configured to:
determine the first gradient and a second gradient based on the target output; and
the computing core further comprises a second data transfer unit, configured to: after the first gradient and the second gradient are determined based on the target output, transfer the second gradient to a computing core of the third processor, so that the computing core of the third processor updates the third target embedding based on the second gradient.

23. The apparatus according to any one of claims 15 to 22, wherein the first processor is a graphics processing unit GPU, an embedded neural network processing unit NPU, or a tensor processing unit TPU, the first memory is a cache, and the second processor is a central processing unit CPU.

24. A model training apparatus, applied to a second processor, wherein the second processor is communicatively connected to a first processor, the first processor comprises a computing core and a first memory, the second processor comprises a second memory, and the first processor and the second processor are processors of different types; and the apparatus comprises:
an obtaining unit, configured to obtain embedding information required by the computing core for performing model training of an M^{th} batch and embedding information stored in the first memory, wherein M is a positive integer greater than 1; and
a data writing unit, configured to write a first target embedding to the first memory based on the embedding information required by the computing core for performing model training of the M^{th} batch and the embedding information stored in the first memory, wherein the first target embedding is an embedding that is required for model training of the M^{th} batch and that is not stored in the first memory.

25. The apparatus according to claim 24, wherein the data writing unit is configured to write the first target embedding to the first memory in a process during which the computing core performs model training of an (M - 1)^{th} batch on a to-be-trained model.

26. The apparatus according to claim 24 or 25, wherein the data writing unit is further configured to: before writing the first target embedding to the first memory, delete at least one embedding from the first memory and write the at least one embedding to the second memory when available storage space of the first memory is less than storage space required for storing the first target embedding, wherein the at least one embedding is an embedding that is not required for model training of the M^{th} batch.

27. The apparatus according to any one of claims 24 to 26, wherein the obtaining unit is further configured to obtain a first vector and a target vector before the data writing unit writes the first target embedding to the first memory, wherein the first vector indicates embeddings required for model training of the M^{th} batch, each element in the first vector indicates one embedding, and different elements indicate different embeddings; and the target vector indicates permutations of the embeddings indicated by the elements in the first vector when model training of the M^{th} batch is performed, and the embedding indicated by each element appears at least once in the permutations; and
the data writing unit is further configured to transfer the first vector and the target vector to the first processor.

28. The apparatus according to any one of claims 24 to 27, wherein the first processor is a graphics processing unit GPU, an embedded neural network processing unit NPU, or a tensor processing unit TPU, the first memory is a cache, and the second processor is a central processing unit CPU.

29. A model training apparatus, wherein the apparatus comprises a memory and a processor, code is stored in the memory, and the processor is configured to obtain the code and perform the method according to any one of claims 1 to 14.

30. A computer storage medium, wherein one or more instructions are stored in the computer storage medium, and when the one or more instructions are executed by one or more computers, the one or more computers are enabled to perform the method according to any one of claims 1 to 14.

31. A computer program product, wherein the computer program product comprises code, and when the code is executed, steps of the method according to any one of claims 1 to 14 are implemented.
